Europäisches Patentamt

European Patent Office

Office européen des brevets

(11) Publication number: **0 644 407 A2**

# EUROPEAN PATENT APPLICATION

(21) Application number: **94114749.8**

(22) Date of filing: **19.09.94**

(51) Int. Cl.⁶: **G01G 19/56**

(30) Priority: **20.09.93 JP 256352/93**
  **25.01.94 JP 23183/94**
  **31.03.94 JP 85837/94**
  **07.03.94 JP 36054/94**
  **22.04.94 JP 107524/94**
  **10.06.94 JP 128608/94**

(43) Date of publication of application:
**22.03.95 Bulletin 95/12**

(84) Designated Contracting States:
**DE FR GB**

(71) Applicant: **KABUSHIKI KAISHA SANKYO SEIKI SEISAKUSHO**
**5329, Shimosuwa-machi**
**Suwa-gun**
**Nagano-ken (JP)**

(72) Inventor: **Wakai, Kiyoshi, c/o K. K. Sankyo Seiki Seisakusho**
**Iida Works,**
**10020, Kega**
**Iida-shi,**
**Nagano (JP)**
Inventor: **Hanaoka, Toshiki, c/o K. K. Sankyo Seiki**
**Seisakusho,**
**5329, Shimosuwa-machi**
**Suwa-gun,**
**Nagano (JP)**

(74) Representative: **Patentanwälte Grünecker,**
**Kinkeldey, Stockmair & Partner**
**Maximilianstrasse 58**
**D-80538 München (DE)**

(54) **Weight detecting device.**

(57)  A weight detecting device includes an article table on which an article to be measured, a drive motor for turning the article table, torque conversion means for converting weight of the measured article located on the article table into a load torque acting on the drive motor under a given proportional condition, load detecting device for detecting a load torque acting on the drive motor through the torque conversion device, and weight measuring device for measuring a weight of the measured article according to the load torque obtained by the load detecting device, while referring to the correlation between the load torque and the load.

FIG. 1

## BACKGROUND OF THE INVENTION

### Field of the Invention

The present invention relates to a weight detecting device for electrically detecting a weight of an article under measurement, such as food to be cooked.

### Related Art

This type of the weight detecting device is incorporated into various type of electronic devices.

In an electromagnetic cooker (electronic cooker), for example, to secure a uniform distribution of head over food, food is put on an article support table or a turn table and exposed to in a shower of microwaves while turning the table at a given speed.

The electromagnetic cooker of the auto-cooking type includes a weight detecting device. In operation, the cooker weighs the weight of food on the table, and selectively picks up an appropriate cooking program in accordance with the weight and kind of the food, and automatically executes the cooling program.

Various types of weight detecting devices have been employed for the electromagnetic cooker.

In a conventional weight detecting device, an article to be weighed is put on an article support table, such as a turn table. A load of the weighed article is converted into a corresponding quantity of displacement by means of a spring, for example. A distance between the electrodes of a capacitor is varied in accordance with the quantity of displacement, so that capacitance of the capacitor is varied. In another weight detecting device, the core in a coil is varied in position in accordance with the quantity of displacement, so that inductance of the coil is varied (Published Unexamined Japanese Utility Model Application No. Hei. 1-95642). In another weight detecting device, resistance of a resistor is varied in accordance with the quantity of displacement caused by the pressure by a load.

Any of these weight detecting devices includes a voltage controlled type oscillator (V/F converter). The capacitor, the coil, or the resistor is contained as a part in the oscillator. The weight detecting device detects a variation of weight of the cooled article in the form of a variation of frequency, which correspond to a variation of capacitance, inductance, or resistance.

In these weight detecting devices, the weight of the weighed article on the table directly acts on the rotary shaft of a drive motor. Accordingly, when the weighed article is put on a deviated location on the table, a deviated load acts to cause a variation of the weight of the article. An excessive load causes a permanent strain in the spring. As a result, a weight detection accuracy is degraded.

A synchronous motor, such as an AC inductance motor, a stepping motor, or the like, is used for the drive motor for the turn table of the cooker.

An AC inductor motor is constructed such that an alternating magnetic field is applied from the stator to the magnetic poles circumferentially arrayed on the magnetic rotor, and a magnetic attraction and a magnetic repulsion act on the rotor, thereby causing a torque to turn the rotor. The rotor alternately passes acceleration regions and deceleration regions, delimited by polarity changing positions of alternating magnetic field of the stator, and rotates by its inertia. The rotor rotates at an average value of the increased and decreased torque and synchronously with the power source. When a load increases during the rotation of the rotor, the phase of rotation of the rotor delays behind the timing at which the stator magnetic pole is changed over to another. Accordingly, the rotor is turned at a constant speed by increasing the number of the acceleration regions and the deceleration regions.

Generally, a load torque to the motor is measured to know the output characteristic of the motor. To measure the load, a "flexure" of a rod-like solid located between the motor and the load is measured. In one of the know methods for measuring the flexure of the rod-like solid, a strain sensor is attached to the side wall of the rod-like solid, and a variation of the electrical characteristic is measured by the strain sensor. In another known method, an incremental encoder is connected to the load side of the rod-like solid and another incremental encoder is connected to the motor side of the same. A phase difference between these incremental encoders.

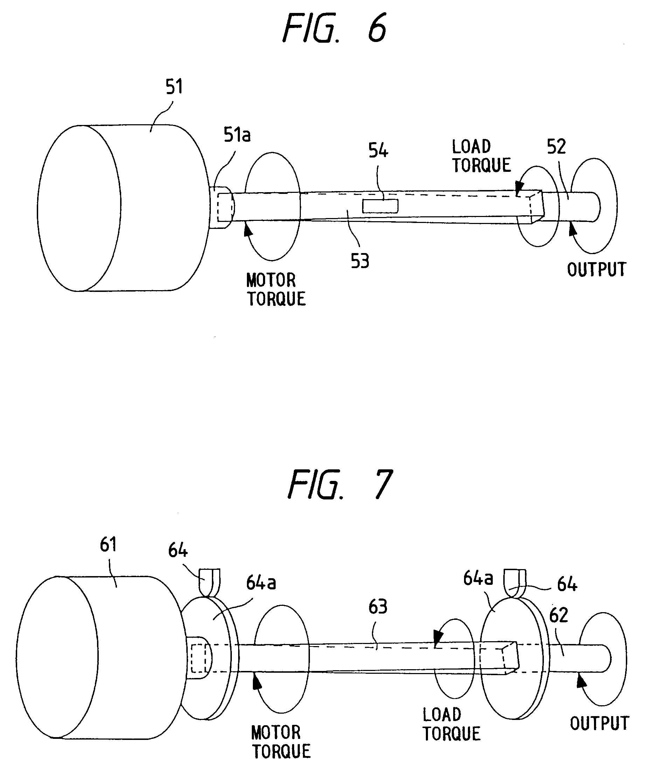

A flexure measuring device for measuring a flexure of the rod-like solid by the first flexure measuring method is illustrated in Fig. 6. A rod-like solid 53, rectangular in cross section, is located between an output shaft 51a of a motor 51 and a load 52. A strain sensor 54 is attached to the side wall of the rod-like solid 53. The strain sensor 54 is of the type using a metal thin film, of the piezoelectric element made of a crystal, or of other types. One knows a load torque by sensing a flexure of the rod-like solid 53 by the strain sensor 54. When using this flexure measuring device, a load torque to the motor 51 can be measured even if the motor 51 is at a standstill. The load torque can be gained in terms of a resistance value or a voltage

2

value. An special signal processing is not required. A part, such as a brush, is required for picking up a signal from the strain sensor 54 on the rotating rod-like solid 53.

A flexure measuring device for measuring a flexure of the rod-like solid by the second strain measuring method is illustrated in Fig. 7. As shown, incremental encoders 64 and 64 are provided on both sides of a rod-like solid 63. A load torque is detected by using a phase difference between the periodical signals output from those incremental encoders 64 and 64. To obtain a periodical signal from the incremental encoder 64, a sensor 64a of the encoder must be rotated at a given speed. Particularly when a motor 61 is at a standstill, a high precision sensor drive motor is required. Therefore, a brush and a rotary transformer are indispensable for this flexure measuring device. Further, to utilize the output signals for the flexure detection, a special signal processing, such as integration of the phase difference signal, is required.

The load detecting device of this type which uses the rod-like solid has a good precision of detection. Accordingly, the device is suitable for the measurement of various motor characteristics. However, use of the rod-like solid leads to increase of the device size and complexity of the device construction.

A small synchronous motor, such as an AC inductor motor, operates such that when the load of the magnetic rotor increases, a rotation phase of the rotor delays behind a phase of a drive power source. A delay of the rotation phase of the rotor has a correlation with a magnitude of the load of the rotor. This fact indicates that the magnitude of the load can be indirectly obtained using the delay of the rotation phase of the rotor.

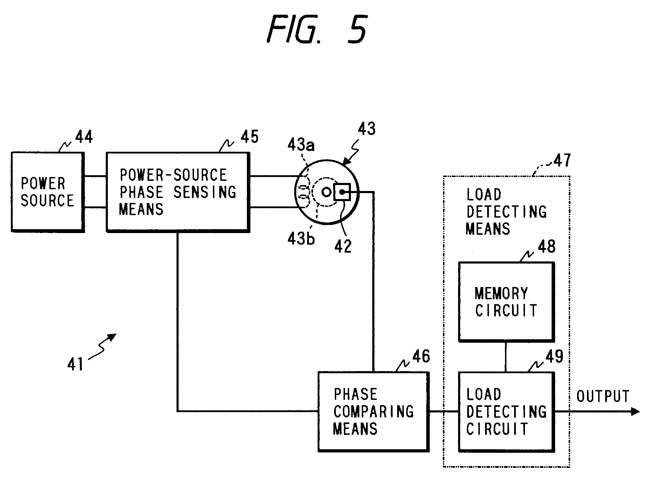

Fig. 5 shows the arrangement of a conventional load measuring device 41 (Published Unexamined Japanese Patent Application No. Hei. 5-227704). In the figure, a winding 43a of the stator of a synchronous motor 43, e.g., an AC inductance motor, is excited by an AC drive power source 44. A power source phase of the AC drive power source 44 is sensed by a power-source phase sensing means 45, and a rotation phase of a permanent-magnet type rotor 43b of the synchronous motor 43 is sensed by a phase sensor 42 (magnetic sensor).

The power source phase signal and the rotation phase signal, thus sensed, are input to a phase comparing means 46. The phase comparing means 46 produces a signal representative of these phase signals received, and transfers it to a load detecting circuit 49. The load detecting circuit 49 reads load data corresponding to the phase difference from a memory circuit 48, and produces an output signal corresponding to the magnitude of the load. Incidentally, phase differences and load data corresponding to them are previously stored in the memory circuit 48.

The phase sensor 42 is essential to the conventional load measuring device. The sensor is assembled into the motor. As a result, the motor structure is complicated.

SUMMARY OF THE INVENTION

An object of the present invention is to provide an indirect measurement of a load of a synchronous motor, such as an AC inductance motor or a stepping motor, without using a phase sensor.

Another object of the present invention is to provide an a weight detecting device in eliminating a weight variation owing to a deviated load, necessity of using the load detector and the spring, and in realizing the size reduction of the device and improvement of a detection accuracy.

Another object of the present invention is to provide a load detecting means having a construction as to be easily attached to home appliances, and capable of detecting a load torque acting on the synchronous motor at low cost.

Another object of the present invention is to provides a load detecting device for detecting a load of a synchronous motor in a weight detecting device which is capable of detecting a load torque acting on the motor from a basic characteristic of the motor without using a spring, and minimizing a frequency variation by a variation of the power source voltage.

Another object of the present invention is to provided a load detecting circuit for a synchronous motor in an electromagnetic cooker of the load-frequency conversion type, which produces a load detect signal substantially free from the adverse influence by the special temperature dependency. The load detecting circuit is realized without any special detecting element.

According to an aspect of the present invention, there is provided a weight detecting device comprising: an article table on which an article to be measured; a drive motor for turning the article table; torque conversion means for converting weight of the measured article located on the article table into a load torque acting on the drive motor under a given proportional condition; load detecting means for detecting a load torque acting on the drive motor through the torque conversion means; and weight measuring means for measuring a weight of the measured article according to the load torque obtained by the load detecting means, while referring to the correlation between the load torque and the load.

According to another aspect of the present invention, there is provided a load detecting device comprising: load detecting means for detecting a load of a synchronous motor of which the rotor is rotated in synchronism with an alternating magnetic field developed by the rotor, through an interactive action of an alternating magnetic field developed by a drive coil of a stator and the alternating magnetic field by the rotor, wherein the load detecting means including a detecting coil disposed so as to cross the alternating magnetic field developed from the stator and the alternating magnetic field developed by the rotor.

According to another aspect of the present invention, there is provided a load measuring device comprising: a synchronous motor; voltage/current measuring means for measuring a voltage applied to a winding a the synchronous motor and a current flowing through the winding; power factor calculating means for calculating an effective power by multiplying the voltage and the current, and an apparent power by multiplying an effective value of the voltage and an effective value of the current, and for calculating a power factor by calculating the ratio of the effective power and the apparent power; and load detecting means for converting the power factor calculated by the calculating means to a load of the synchronous motor, by utilizing the correlation between the load and the power factor so as to measure a magnitude of the load of the synchronous motor in accordance with the magnitude of the power factor.

Accroding to the present invention, no sensor must be attached to the motor. A load of the motor when it is operating can be measured without altering the structure of the motor in any way.

According to the present invention, the weight of an article to be cooked, which is located on the turn table, is received by the plural number of rollers on the base table. Therefore, little deviated load acts on the rotary shaft of the drive motor. The problem of the weight variation caused by the deviated load is successfully solved.

The size reduction of the cooker is realized since there is no need of using the conventional load detecting device. Additionally, the spring used in the conventional device is unnecessary in constructing the weight detecting device of the invention. Therefore, an excessive load causes no permanent strain in the spring. And a weight detection accuracy is improved.

According to the present invention, an article supporting table with an article located thereon is turned by a drive motor (synchronous motor). A torque converting means converts a weight of the article on the table into a load torque acting on the drive motor. A load detecting coil attached to the drive motor detects the converted load torque. The relationship between weights and load torques are previously obtained. The load detecting means obtains the weight of the article referring to the weight-load torque relation. Therefore, the construction of and the signal processing by the load detecting means are extremely simplified. An improved load detecting accuracy is secured.

The detecting coil is disposed so as to cross both the alternating magnetic field developed by the drive coil of the synchronous motor and the magnetic field by the rotor. With the detecting coil thus disposed, the load detecting means produces a signal of which the amplitude is monotonously decreased with respect to a variation of the load of the motor. Therefore, the construction of and the signal processing by the load detecting means are extremely simplified, so that the size and cost of the load detecting means are reduced.

According to the present invention, the load detecting device is able to detect a load of a synchronous motor without using a mechanical means of which the major physical property is easy to vary with time, such as a spring. This ability of the load detecting device is realized by using a voltage signal derived from the detecting coil of the synchronous motor, which is arrayed so as to cross a magnetic field developed by the drive coil and a magnetic field of the rotor. The amplitude of the voltage signal output from the detecting coil thus arrayed is monotonously decreased with respect to a variation of the load. Further, the load detecting device of the invention is able to minimize a detection error caused by a variation of the output voltage of the motor drive power source. This ability is realized by uniquely interlocking the trigger voltages in the CR self-oscillation circuit with the voltage of the motor drive power source.

According to the present invention, a load detecting circuit for a synchronous motor contains a temperature compensation coil wound by the cancel winding provided in the synchronous motor. A charging/discharging time of the capacitor in the CR self-oscillation circuit is increased in accordance with a resistance increase of the coil, which is due to temperature rise of the coil. Therefore, the frequency variation of the load detecting signal, which is caused by temperature variation, is minimized.

Additionally, a mechanical detector for detecting a displacement of the turn table in the axial direction is not used for the load detection. The shaft support structure is not complicated.

BRIEF DESCRIPTION OF THE DRAWINGS

Fig. 1 is a block diagram showing a load measuring device according to a first embodiment of the present invention;

Fig. 2 is a graph showing the relationship between load and power factor;

Fig. 3 is a block diagram showing a load measuring device according to a second embodiment of the present invention;

Fig. 4 is a graph showing the relationship between temperature and power factor;

Fig. 5 is a block diagram showing a conventional load measuring device;

Fig. 6 is a diagram showing a load detecting device, usually used for measuring the output characteristics of a motor;

Fig. 7 is a diagram showing another load detecting device, usually used for measuring the output characteristics of a motor;

Fig. 8 is a side view, partly in cross section, showing a key portion of an electromagnetic cooker which uses a weight detecting device according to a third embodiment of the present invention;

Fig. 9 is a plan view showing the electromagnetic cooker shown in Fig. 8;

Fig. 10 is a side view, partly in cross section, showing a key portion of the electromagnetic cooker shown in Fig. 8, when a torque conversion rate is changed;

Fig. 11 is a plan view showing the electromagnetic cooker of Fig. 9 when a torque conversion rate is changed;

Fig. 12 is a diagram showing the respective dimensions of a roller, useful in explaining a torque for rotating a turn table in the electromagnetic cooker;

Fig. 13 is a traverse sectional view showing a drive motor used for the weight detecting device of the third embodiment;

Fig. 14 is a plan view showing the drive motor for the weight detecting device of Fig. 13;

Fig. 15 is a bottom view showing the drive motor;

Fig. 16 is a transverse sectional view showing a drive motor used for another weight detecting device of the third embodiment;

Fig. 17 is a transverse sectional view showing a drive motor used for yet another weight detecting device of the third embodiment;

Fig. 18 is a block diagram showing a load detecting circuit according to the fourth embodiment of the present invention;

Fig. 19 is a circuit diagram showing the details of the load detecting circuit of Fig. 18;

Fig. 20 is a transverse sectional view showing a synchronous motor to be combined with the load detecting circuit of the fourth embodiment;

Fig. 21 is an exploded view in perspective of the synchronous motor of Fig. 20, the cross section of Fig. 21 taken on line A - A in Fig. 21.

Fig. 22 is an equivalent circuit of a load detecting mechanism in the synchronous motor in the fourth embodiment;

Fig. 23 (A) is a voltage vector diagram in the equivalent circuit of Fig. 22;

Fig. 23 (B) is a diagram comparatively showing the magnitudes of the sides OQ and OQ' in the triangles shown in Fig. 24;

Fig. 24 is a voltage vector diagram comparatively showing voltage vectors before and after the load is varied;

Fig. 25 is a graph showing a variation of a detecting voltage with respect to load torque;

Fig. 26 is a graph showing load torque vs. weight curves plotted when the proportional condition is changed at the time of torque conversion;

Fig. 27 is a graph showing weight vs. load torque curves when the proportional condition is changed at the time of torque conversion;

Fig. 28 is a circuit diagram showing another load detecting circuit according to the fourth embodiment in which the oscillator circuit is constructed using an IC package of NE555;

Fig. 29 is a diagram showing another torque converting means applicable for the load detecting means according to the fourth embodiment;

Fig. 30 is a circuit diagram showing a load detecting circuit for a synchronous motor according to a fifth embodiment of the present invention;

Fig. 31 is a circuit diagram showing another load detecting circuit for a synchronous motor according to a fifth embodiment of the present invention, which the oscillator circuit is constructed using an IC package of NE555.

Figs. 32 (A) to (C) are waveform diagrams showing waveforms of signals at key portions in the Fig. 30 circuit;

Fig. 33 (A) to (C) are waveform diagrams showing waveforms of signals at key portions in the Fig. 31 circuit;

Fig. 34 is a waveform diagram useful in explaining the compensation of a voltage variation of a motor drive power source;

Fig. 35 is a circuit diagram showing another preferable power source for the oscillator circuit in the load detecting circuit according to the fifth embodiment;

Fig. 36 is a transverse sectional diagram showing a synchronous motor coupled with a load detecting circuit in a load detecting device according to a sixth embodiment of the present invention;

Fig. 37 is an exploded view in perspective of the synchronous motor of Fig. 36, the cross section of Fig. 36 taken on line A - A in Fig. 37;

Fig. 38 is a circuit diagram showing a signal processing section of the load detecting device according to the sixth embodiment of the present invention;

Fig. 39 is a circuit diagram showing another signal processing section of the load detecting device according to the sixth embodiment of the present invention;

Fig. 40 is a diagram showing a turn table drive mechanism incorporating a synchronous motor coupled with the load detecting device according to the sixth embodiment;

Fig. 41 is an equivalent circuit of a load detecting mechanism in the synchronous motor in the sixth embodiment;

Fig. 42 is a voltage vector diagram in the equivalent circuit of Fig. 41;

Fig. 43 is a voltage vector diagram comparatively showing voltage vectors before and after the load is varied;

Fig. 44 is a diagram useful in explaining the cancel winding method;

Fig. 45 is a Diagram useful in explaining how to dispose a temperature compensation coil in order to detect a temperature variation without any influence by an external magnetic field;

Fig. 46 is a diagram showing a modification of the temperature compensation coil; and

Fig. 47 (A) to (C) are circuit diagrams showing other signal processing sections that may be used for the load detecting device according to the sixth embodiment.

DETAILED DESCRIPTION OF THE PREFERRED EMBODIMENTS

First embodiment

The preferred embodiments of the present invention will be described with reference to the accompanying drawings. Throughout the drawings, like or equivalent portions will be designated by like reference numerals, characters and the like, for simplicity.

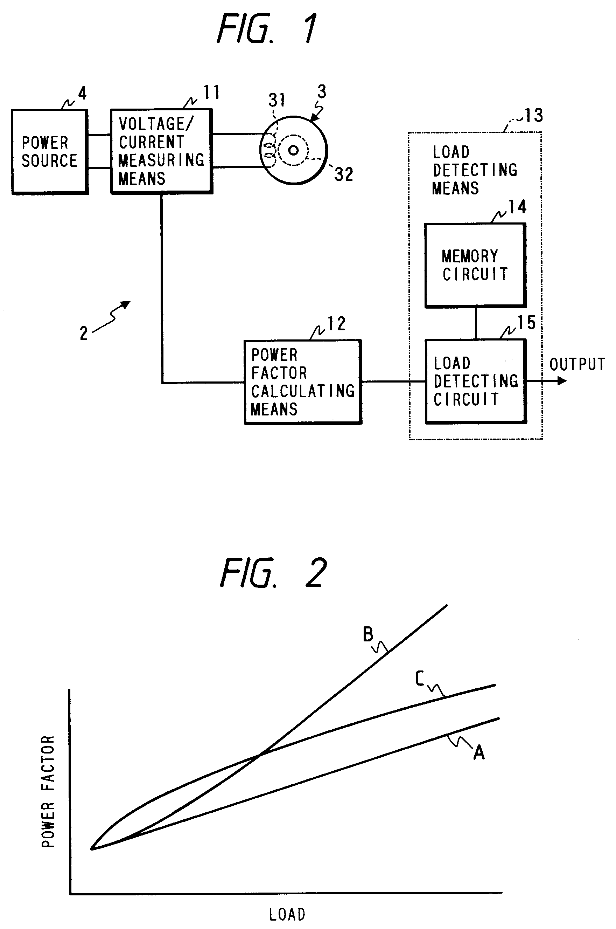

A load measuring device 2, not having a temperature compensation function, for indirectly measuring a load of a synchronous motor 3, which is a first embodiment of the present invention, is shown in Fig. 1. A winding 31 of the stator of a synchronous motor 3, such as an AC inductance motor, is excited by an AC drive power source 4. A voltage/current measuring means 11, located between the AC drive power source 4 and the synchronous motor 3, measures a voltage applied to the winding 31 of the synchronous motor 3 and a current flowing to the winding 31, and transfers the measurement results to a power-factor calculating means 12.

The power-factor calculating means 12 multiplies the product of the voltage and the current to produce an effective power, multiplying the voltage and the effective value of the current to produce an apparent power, and the ratio of the effective power and the apparent power to produce a power factor. Incidentally, the power factor is mathematically expressed by

Power factor = effective power/apparent power.

The thus calculated power factor is input to a load detecting circuit 15 of a load detecting means 13. Data representative of correlations between the load and the power factor is previously stored in a memory circuit 14 of the load detecting means 13. The correlation between the load and the power factor, which depends on the type and structure of the synchronous motor 3, may be represented by a rectilinear curve A or a curve B or C in a graph of Fig. 2. The load detecting circuit 15 searches the data in the memory circuit 14 by using the input power factor to look up the load defined by the input power factor, and produces a signal representative of the magnitude of the load.

Second embodiment

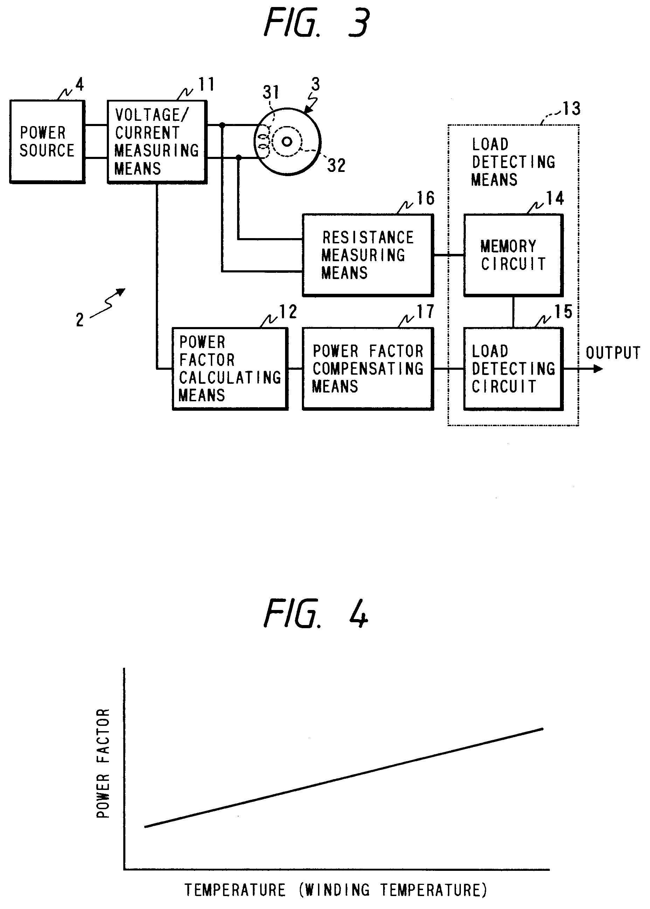

A load measuring device 2 according to a second embodiment of the present invention is shown in Fig. 3. The load measuring device 2 processes signals while carrying out a temperature compensation. Resistance of a winding 31 varies depending on temperature rise during the device operation. Accordingly, the power factor depends on temperature. As shown in Fig. 3, a resistance measuring means 16 is connected to the winding 31, for temperature compensation. A power factor compensating means 17 is connected to between the power-factor calculating means 12 and the load detecting means 13.

The power factor measured as in the first embodiment is input to the power factor compensating means 17. A resistance value of the winding 31, measured by the resistance measuring means 16, is also input to the power factor compensating means 17. The resistance measuring means 16 measures a temperature rise of the winding 31 through a variation of resistance of the winding 31, from an initial temperature or a standard temperature, e.g., 20 °C.

The relationships of power factor and temperature are stored in the memory circuit 14, in addition to the load/power factor data. The power factor compensating means 17 reads a power factor after temperature compensated from the memory circuit 14, and sends it to the load detecting circuit 15. Thereafter, as in the first embodiment, the load detecting circuit 15 reads a load from the memory circuit 14 storing the load/power factor data by using the compensated power factor, and produces a signal indicative of the readout load defined by the correct power factor.

As seen from the description of the first and second embodiments of the invention, no sensor must be attached to the motor. A load of the motor when it is operating can be measured without altering the structure of the motor in any way.

In the conventional load measuring device, the phase sensor (magnetic sensor), which senses the magnetized phase of the rotor, is influenced by a magnetic field developed by the current of the coil. Accordingly, the phase signal is distorted, causing an error in the load measurement. On the other hand, such a measuring error is never caused since the phase sensor is not used in the load measuring device of the present invention. Additionally, the temperature variation of the coil is compensated, so that the power factor is exactly measured. Hence, the load can be measured with a high precision.

Third embodiment

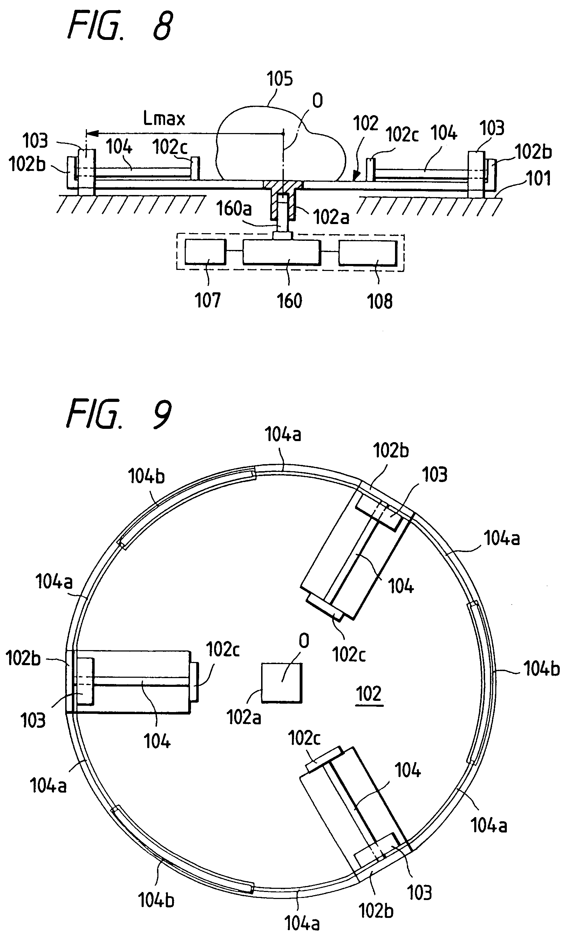

A weight detecting device according to a third embodiment of the present invention will be described with reference to Figs. 8 to 17. A unique weight detecting device according to the present invention is incorporated into the electromagnetic cooker.

The third embodiment the weight detecting device succeeds in eliminating a weight variation owing to a deviated load, necessity of using the load detector and the spring, and in realizing the size reduction of the device and improvement of a detection accuracy.

As shown in Figs. 8 and 9, a turn table 102 is rotatably supported by three rollers 103 on a base table 101, which partitions the inside of the cooker into an upper portion and a lower portion. The turn table 102, shaped like a disc, serves as an article support table. The rollers 103 are rotatably supported by roller shafts 104 mounted on the lower side of the turn table 102. The roller shafts 104 are radially extended, and angularly and equidistantly arrayed on the turn table 102. When the rollers 103 revolve around the center axis O while rolling on the base table 101, the turn table 102 with a cooked article 105 located thereon is turned.

A boss portion 102a with a hole, square in cross section, is projected along the center axis O from the lower surface of the turn table 102. A rotary output shaft 160a of a drive motor 160 is inserted into this boss portion 102a. The rotary output shaft 160a and the hole of the boss portion 102a, which are rectangular in cross section, are coupled with each other axially movably. With this structure, the load by the weight of the cooked article 105 located on the turn table 102 is received y the rollers 103. The drive motor 160 receives only the rotation load torque by the weight of the cooked article 105. Thus, the rollers 103 constitutes a torque converting means for converting the weight of the load detecting circuit 15 to a load torque acting on the drive motor 160. The details of the torque conversion will be described later.

The structure to prohibit the weight of the cooked article 105 on the turn table 102 from acting on the rotary output shaft 160a is not limited to the above-mentioned structure shown in Fig. 8. In another structure, the top end portion of the rotary output shaft 160a is axially movably fit to the receiving portion of the turn table 102 with a gap therebetween. Pins planted in the rotary output shaft 160a are axially slidable in the receiving portion of the turn table 102 so as to transmit only the angular motion to the turn table 102. With this structure, the weight of the cooked article 105 on the turn table 102 is supported by the rollers 103, and the rotary output shaft 160a does not receive the weight thereof.

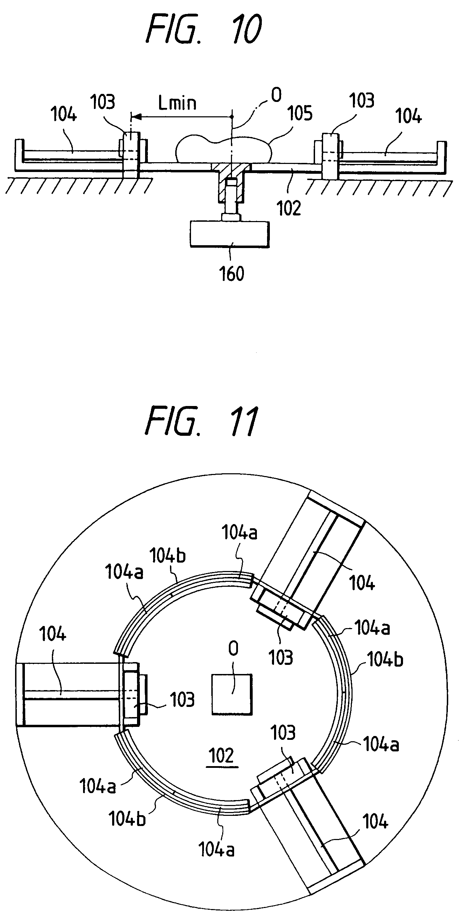

Each of the three roller shafts 104 is extended between an outer bearing plate 102b formed upright on the outer circumferential edge of the turn table 102 and an inner bearing plate 102c formed upright at a mid point on the turn table when viewed in the radial direction. These roller shafts 104 arrayed on the turn table are radially extended with respect to the center axis O. Each roller 103 is reciprocatively moved along the roller shaft 104 associated therewith. In this sense, the structure made of the roller, the roller shaft, and the outer and inner bearing plates functions as a slide mechanism. In the slide mechanism, each roller 103 is reciprocatively moved between the outermost position (maximum radius of rotation Lmax) (Figs. 8 and 9) and the innermost position (minimum radius of rotation Lmin) (Figs. 10 and 11). In the instant embodiment, Lmax < 2 Lmin. The length of the arm of a moment for rotating the turn table is varied by the movement of the roller 103 in the radial direction. In this sense, the structure functions as a torque conversion rate adjusting mechanism for changing a proportional condition for the torque conversion.

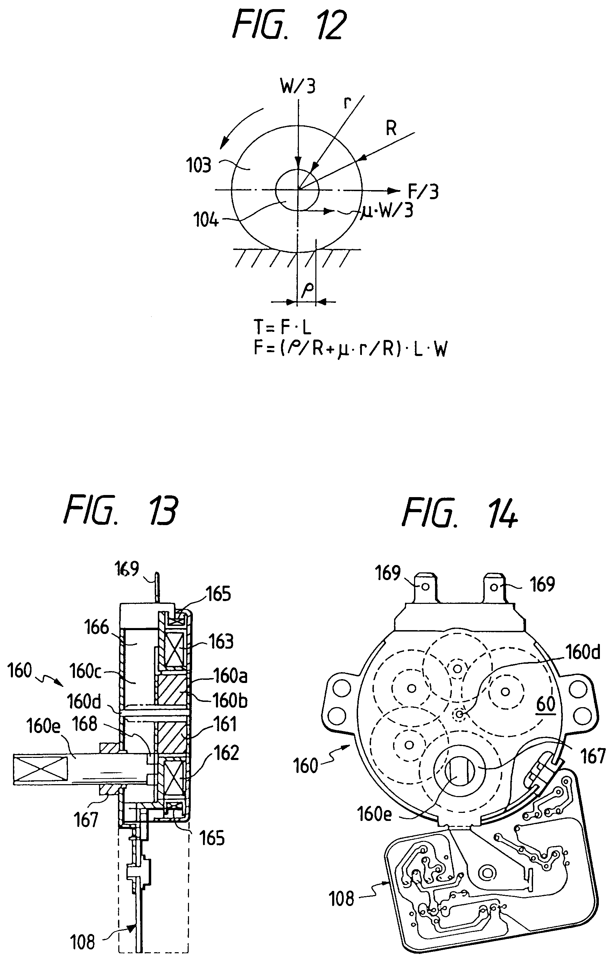

Let us calculate torque T for turning the turn table 102. Reference is made to Fig. 12. In the illustration of Fig. 12, the following equation holds

$$F/3 \ = \ \rho \cdot W/3R \ + \ \mu \cdot W \cdot r/3R$$

where

| | |
|---|---|
| R | : radius of each roller 103 |
| r | : radius of the roller shaft 104 |
| F/3 | : force necessary for turning one of three rollers 103 |
| W/3 | : load acting on one roller 103 |
| $\rho$ | : rolling friction coefficient |
| $\mu$ | : sliding friction coefficient. |

Rearranging the above equation for F, we have

$$F \ = \ (\rho/R \ + \ \mu \cdot r/R)W.$$

The torque T for turning the turn table 102 is given by

$$T \ = \ F \ \cdot \ L$$
$$= \ (\rho/R \ + \ \mu \cdot r/R)W \ \cdot \ L$$

where L : distance ranging from the center O of rotation of the rollers 103 to the roller 103. The above equation teaches that the load torque of the drive motor 160 varies proportionally to a variation of the weight of the cooked article 105 placed on the turn table 102. The proportional condition (proportional constant) varies depending on the location L of the roller 103.

The slide mechanism includes an interlocking mechanism for changing the positions of the rollers 103 simultaneously. The roller shaft 104 of each roller 103 is provided with a pair of arcuate spring members 104a circumferentially extended from the roller shaft 104 to the both sides thereof. The arcuate spring members 104a extended from the adjacent rollers 103 are inserted into an arcuate sleeve 104b in a manner that one of the spring members is inserted into the sleeve from one end of the sleeve, and the other one is inserted into the other end of the sleeve. The curvature of the sleeve 104b is substantially equal to that of the arcuate spring member 104a. With this interlocking mechanism, when one of the three rollers 103 is radially moved, the movement is transmitted to the adjacent rollers by way of the arcuate spring members 104a and the arcuate sleeve 104b. Then, these adjacent rollers are also moved in the radial direction.

The construction of the drive motor 160 is illustrated in Figs. 13, 14, and 15. As shown, a drive portion 160b and a reduction portion 160c are arrayed side by side in the axial direction within a shield case 166.

A rotor 161 is located in the central part of the drive portion 160b. In the reduction portion 160c, a reduction gear chain 60 consisting of a preset number of gears is located in the range from a shaft 160d to a final output shaft 160e. The shaft 160d is extended outward from the center of the rotor 161 in the drive portion 160b. The output shaft 160e is rotated at a given reduction ratio.

The base of the output shaft 160e is supported by a thrust bearing 168 and the mid portion thereof is rotatably supported by a radial bearing 167.

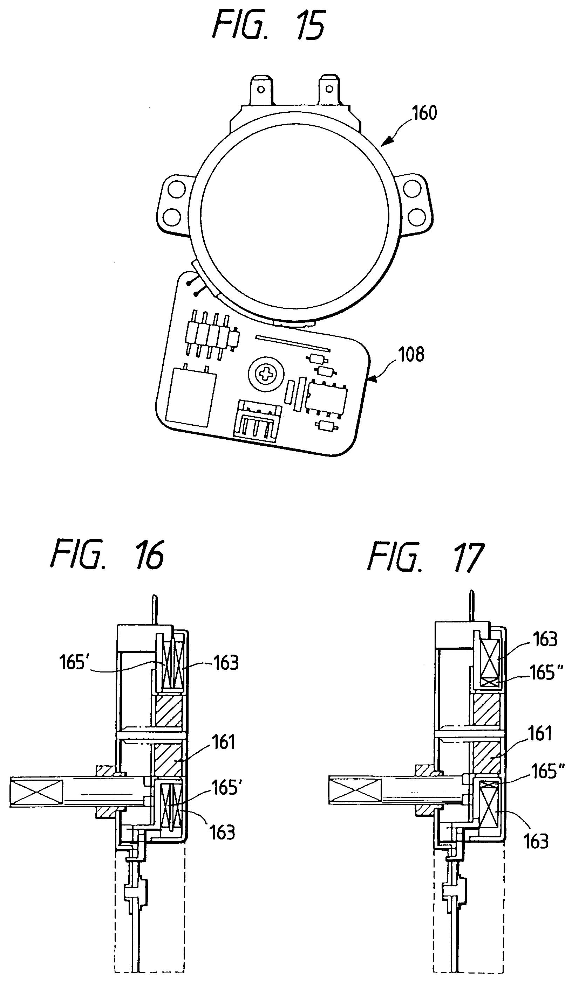

Another drive motor applicable for the weight detecting device used in the electromagnetic cooker according to the third embodiment is shown in Fig. 16. As shown, a detecting coil 165' as a load detecting means is located facing a drive coil 163.

A further drive motor applicable for the weight detecting device is illustrated Fig. 17. In this drive motor, a detecting coil 165'' as a load detecting means is located on the circumferential inner side of the drive coil 163.

Thus, the detecting coil may be arrayed at any location near the drive coil 163 if it crosses an alternating magnetic field associated with the drive current and a magnetic field of the rotor 161.

As seen from the foregoing description, in the weight detecting device used in the electromagnetic cooker according to the third embodiment of the present invention, the weight of an article to be cooked, which is located on the turn table, is received by the plural number of rollers on the base table. Therefore, little deviated load acts on the rotary shaft of the drive motor. The problem of the weight variation caused by the deviated load is successfully solved.

The size reduction of the cooker is realized since there is no need of using the conventional load detecting device. Additionally, the spring used in the conventional device is unnecessary in constructing the weight detecting device of the invention. Therefore, an excessive load causes no permanent strain in the spring. And a weight detection accuracy is improved.

Fourth embodiment

In the structure for supporting and driving the turn table in the electronic cooker that has been described referring to Fig. 8, the load torque acting on the rotation of the rotary output shaft 160a of the drive motor 160 is proportional to a load of the cooked article 105 on the turn table 102. Therefore, a load of the cooked article 105 can be measured using the load torque of the rotary output shaft 160a of the drive motor 160. To this end, a variation of the dynamic characteristic of the synchronous motor, caused by the load torque, is picked up in the form of an electric signal. In a typical turn table, the load torque is approximately 0.8 Nm when the cooked article 105 is 8 kg in weight. Accordingly, when such a heavy article is placed thereon, a small synchronous motor of several watts cannot turn the table. For this reason, the drive torque for turning the rotary output shaft 160a of the synchronous motor for the electronic cooker is increased by reducing the revolving speed of the rotor of the motor by the reduction gear chain 60.

An inventive and unique load detecting means for detecting a load of this type of the synchronous motor, which is a fourth embodiment of the present invention, will be described. The load detecting means of this embodiment has such a construction as to be easily attached to home appliances, and is capable of detecting a load torque acting on the synchronous motor at low cost.

In the fourth embodiment of the present invention, a drive motor 160, as a called synchronous motor, is coupled with a drive power source 107 and a load detecting circuit 108, as shown in Figs. 13, 14, 15, 18 and 19.

The drive motor 160 and the load detecting circuit 108 will be described in detail.

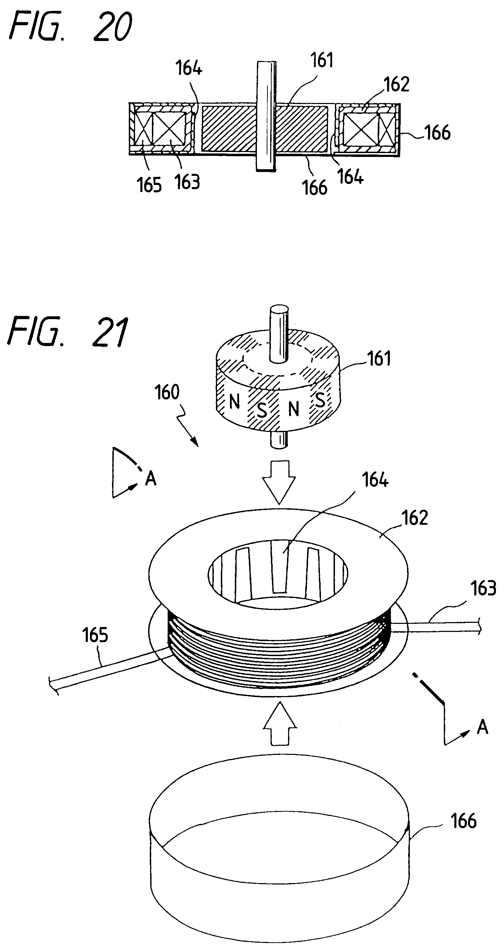

As shown in Figs. 20 and 21, a rotor 161 is a cylindrical permanent magnet. The rotor 161 is magnetized so as to have N and S poles alternately arrayed at fixed pitches as shown. A bobbin-like stator 162 surrounds the rotor 161 with a gap therebetween. A drive coil 163 is put on the body part of the bobbin-like stator 162.

Magnetic poles 164, vertically extended, are alternately arrayed at given pitches on the inner side wall of the stator 162. The array of the magnetic poles 164 is shaped like a comb. When the stator 162 is set around the rotor 161, these magnetic poles 164 face the outer surface of the rotor 161. The magnetic poles 164 are fed with an alternating current from the drive power source 107 through paired terminals 169 (Fig. 14). When the magnetic poles are excited by the alternating current, alternating magnetic fields are developed from the magnetic poles.

The drive coil 163 is put outside the comb-shaped array of the magnetic poles 164. A detecting coil 165 constituting a load detecting means is wound by a necessary number of turns on the outside of the drive coil 163. The structure consisting of the stator 162 with the magnetic poles 164, the drive coil 163, and the magnetic poles 164 is covered with a shield case 166. With provision of the shield case 166, a continuity of the magnetic path including the drive coil 163, outside the comb-shaped arrayed magnetic poles 164, is secured. The shield case 166, tubular in shape, is made of material of high permeability, such as soft iron.

The magnetic field developed by the rotor 161 extends to form a loop connecting the comb-shaped arrayed magnetic poles 164, the stator 162, and the shield case 166. Therefore, the detecting coil 165 crosses both the alternating magnetic field by the drive current and the magnetic field by the rotor 161.

The rotor 161 is magnetized at the pitch equal to the pitch of the comb-shaped arrayed magnetic poles 164. When the rotor 161 is turned, the magnetic field of the rotor 161 passing through the stator 162 alternately varies. With rotation of the rotor 161, a sinusoidal back electromotive force is caused in the drive coil 163 and the detecting coil 165. This back electromotive force will be described later.

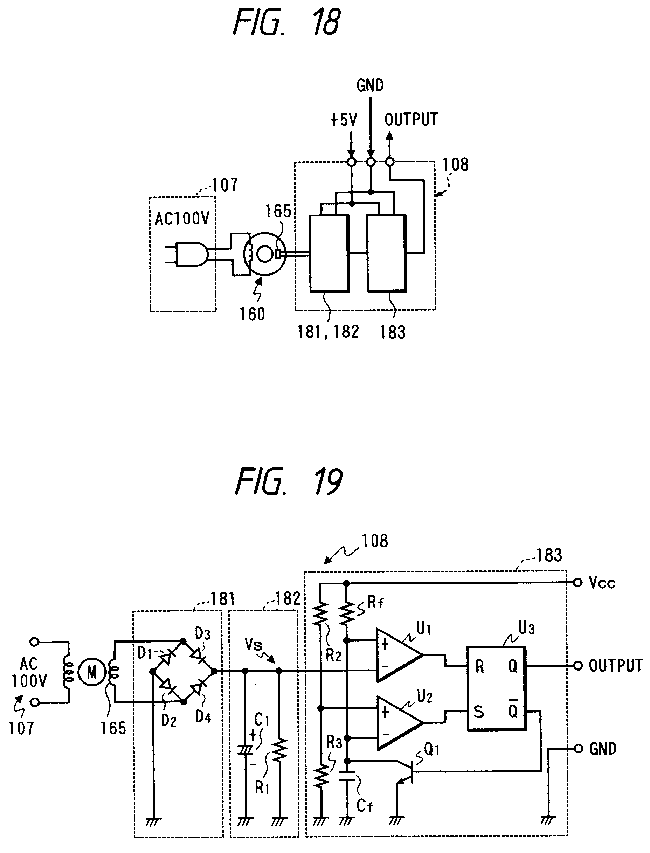

The load detecting circuit 108, as shown in Figs. 18 and 19, is connected to the detecting coil 165 in the drive motor 160. The load detecting circuit 108 includes a rectifier circuit 181, which receives a sinusoidal back electromotive force from the detecting coil 165 and rectifies it, a smoothing circuit 182, and a V/F converter 183, coupled with the output of the smoothing circuit 182, for converting this induced voltage into a corresponding frequency.

The rectifier circuit 181 is a full-wave rectifying circuit of the bridge type, which consists of diode D1 to D4. The smoothing circuit 182 consists of a smoothing capacitor C1 and a resistor R1, which provides a path through which the capacitor C1 appropriately discharges so that the smoothed voltage follows a variation of the load. In the circuit construction where the resistor R1 is not used, the capacitor C1 is discharged through the input of a comparator U1 of the V/F converter 183. A response of the circuit to a load variation is slow. The V/F converter 183 includes an oscillation circuit of which the oscillation is based on the charge/discharge operation by a capacitor Cf and a resistor Rf. A time constant in the oscillating operation is determined by the charging time through the resistor Rf. The charging time is a time from the voltage divided by resistors R2 and R3 to the voltage of the rectifying circuit. If the voltage of the rectifier circuit 181 drops, the charging time is reduced and an oscillation frequency increases. When the voltage of the rectifier circuit 181 increases, the charging time is increased, but the oscillating frequency is decreased. At this time, the rectified voltage monotonously decreases when the load torque increases. The increase of the load torque increases the oscillating frequency. The load of the motor is produced in the form of the frequency of the pulse signal.

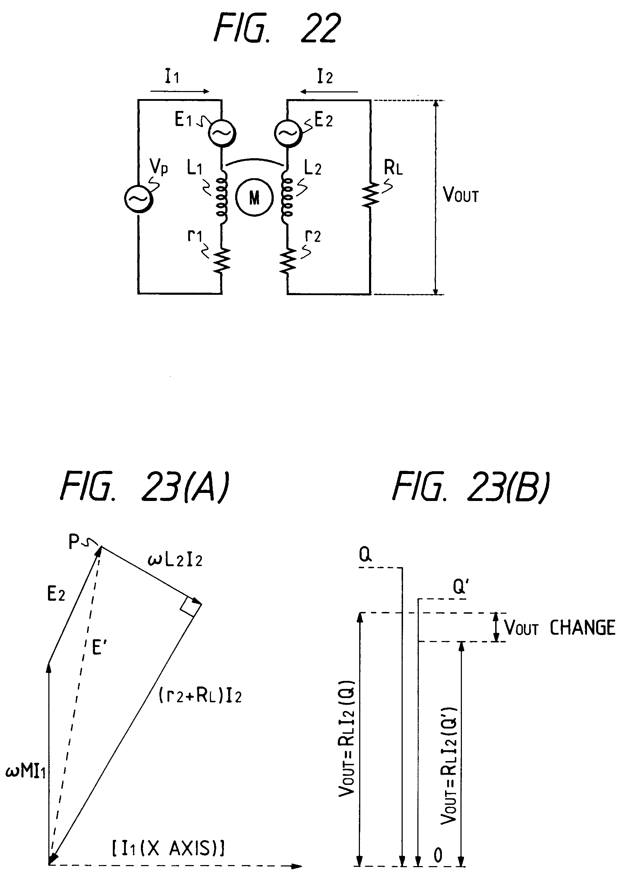

Magnetic and electric operations of the synchronous motor thus constructed will be described. Fig. 22 is an equivalent circuit of the synchronous motor useful in explaining the magnetic and electric operations thereof. The drive coil 163 and the detecting coil 165 form a kind of transformer. This circuit is different from the transformer in that a back electromotive force is caused by the rotor 161. The self-inductance of the drive coil 163 is denoted as L, and the self-inductance of the detecting coil 165, as L2. The mutual-inductance of the drive coil 163 and the detecting coil 165 is denoted as M, a back magnetomotive force caused by the drive coil 163, as E1, and a back magnetomotive force, as E2. The phase of each of the back electromotive forces E1 and E2 becomes delayed as the load of the rotor 161 increases. The reason for this is that the rotation phase of the rotor 161 delays with increase of the load. The synchronous motor stops when it is stepped out. In other words, unless the rotor 161 abnormally rotates, the number of revolutions of the rotor is proportional to the frequency of the drive power source, and the rotation phase of the rotor 161 is synchronized with the phase of the power source with a phase difference therebetween.

The drive coil 163 shown in Fig. 20 is electrically dissolved into an internal resistance r1 and an inductance L1. The detecting coil 165 is also dissolved into an internal resistance r2 and an inductance L2. Further, both the coils have a mutual inductance M. Accordingly, the synchronous motor may be electrically expressed by the equivalent circuit of Fig. 22. An electromotive force E1 is caused in the drive coil 163, and an electromotive force E2 is caused in the detecting coil 165. A power source Vp is connected to the drive coil 163, and a load resistor RL is connected to the detecting coil 165. A variation of the load is detected in form of a variation of the voltage drop VOUT across the load resistor RL

A voltage across the detecting coil 165 may be depicted as a vector diagram shown in Fig. 23A. In the diagram, I1 indicates current of the drive coil 163, and I2, current of the detecting coil 165. In the vector diagram, the current I1 of the drive coil 163 lies on the x-axis. A vector of an electromotive force by the mutual inductance M is perpendicular to the current I1 and has a magnitude of ωMI1. A vector of a back electromotive force E2 by the rotor 161 is added to the vector ωMI1 at an angle to the later. The total sum of the voltage in the circuit is "0". Then, a vector E' is defined by point P as its start point, and the origin as its final point. The vector E' is caused by other electrical components other than the mutual inductance M and the back electromotive force E2, that is, by the internal resistance r2, the inductance L2, and the load resistance RL. A vector of the voltage ωL2I2 caused by the inductance L2 is perpendicular to a vector of the voltage (r2 + RL)I2 of the resistive components. Hence, the vectors E', ωL2I2, and (r2 + RL)I2 form a rectangular triangle. A ratio of the sides right angled is uniquely determined by the circuit construction. Therefore, it is constant even if the back electromotive force E2 changes and the voltage E' is changed.

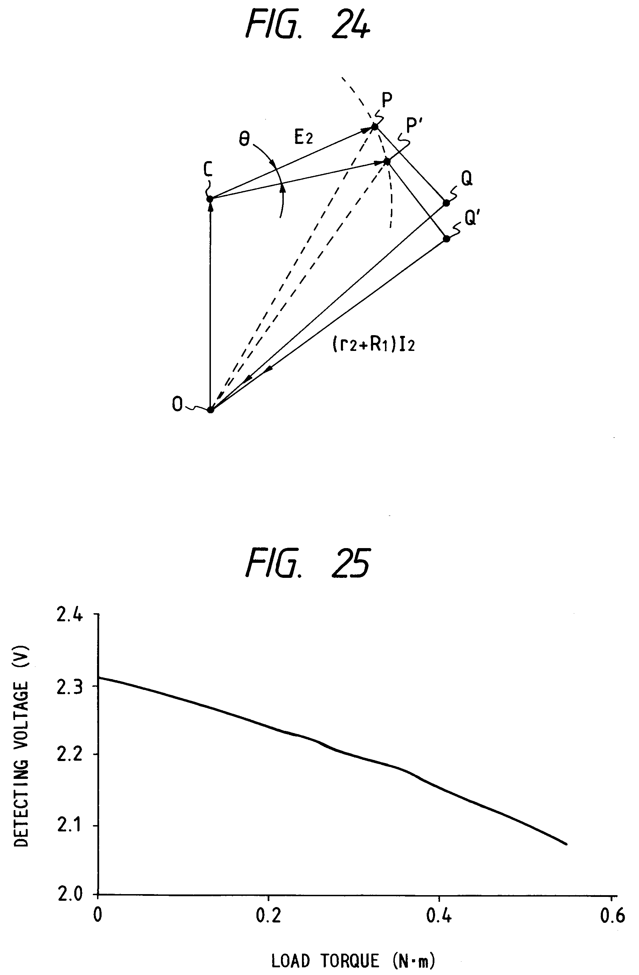

The operation of the synchronous motor will be described with reference to Figs. 23 (A), 23 (B) and Fig. 24. Fig. 24 comparatively shows two vector diagrams when different loads are coupled with the synchronous motor. When a load is coupled with the rotor 161, the phase of the back electromotive force E2 delays, as described above. Accordingly, the tip top of the vector of the back electromotive force E2 is moved from a point P to another point P'. As described above, a rectangular triangle ΔOPQ is similar to another rectangular triangle ΔP'Q'. The point P moves along the circumference of a circle of which the radius is ¦E2¦ and the center is a point C. When the point P moves to the point P', one side of the triangle $\triangle$OPQ is longer than that of the triangle $\triangle$OP'Q'. Since the triangles $\triangle$OPQ and $\triangle$P'Q' are similar to each other, OQ' < OQ. Fig. 23B comparatively shows the magnitudes of the sides OQ and OQ' in the triangles shown in Fig. 24. The magnitude relation of the sides OQ and OQ', OQ' < OQ, is clearly illustrated. This relation can also be presented by the calculation.

This relation holds only when the angle of the vector OC and the vector E2 is as shown in Fig. 23B. In other words, the relation holds only when the back electromotive force E2 is present in the first quadrant. In the synchronous motor, the vector E2 is confined in movement within the first quadrant. The reason for this is that the rotor 161 turns in advance of the phase of the power source. Hence, there never occurs a case where the vector E2 moves beyond the vector OC to enter the second quadrant. When a load is coupled with the rotor 161, the rotation phase of the rotor 161 delays. Accordingly, the angle of the vector OQ to the current I1 decreases. When it is close to O (vector I1), the motor is stepped out and the rotor 161 stops. Therefore, the vector E2 never appears in the fourth quadrant. With increase of the load, the voltage output from the detecting coil 165 decreases in amplitude. Usually, the variation of the amplitude is larger than that of the phase. Therefore, it is advisable to use the amplitude of the voltage for the electrical processing for load detection.

A variation of the output voltage (effective voltage) of the detecting coil 165 with respect to the load torque, experimentally gained, is plotted in Fig. 25. As already referred to, the output voltage monotonously varies with increase of the load torque. The variation is substantially linear. However, strictly, this is not linear, because the output voltage is varied on the basis of the principle as mentioned above.

The effective voltage may readily be obtained by the rectifier circuit 181 and the smoothing circuit 182 of the load detecting circuit 108. When a computer is used for processing the signals for the load detection, a variation of the pulse frequency rather than a variation of the voltage is preferable. For this reason, in this embodiment, a variation of the voltage is converted into a variation of the frequency of an AC signal with a preset carrier frequency.

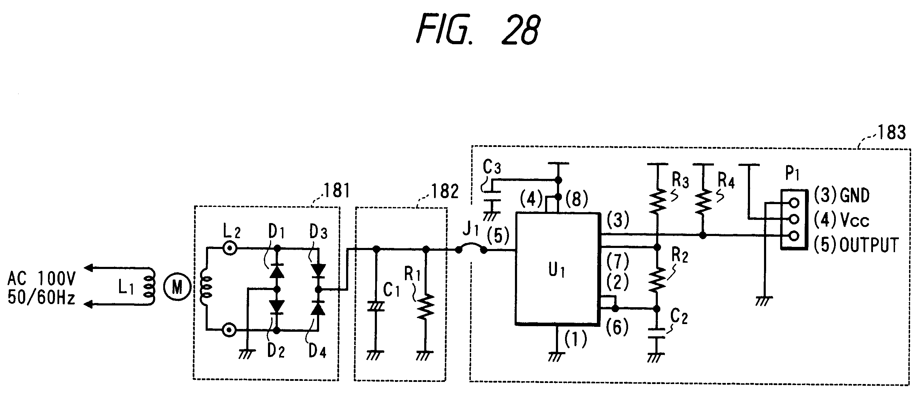

The oscillating circuit in the V/F converter 183 in this embodiment may be replaced by an IC package NE55, for example, manufactured by SIGNETES corporation (now PHILLIPS corporation.) (Fig. 28). The resistor R, and the capacitor C1 in Fig. 19 circuit correspond to resistors R2 and R3, and a capacitor C2 in the Fig. 28 circuit. In Fig. 28, parenthesized numerals indicate pin numbers of the IC package.

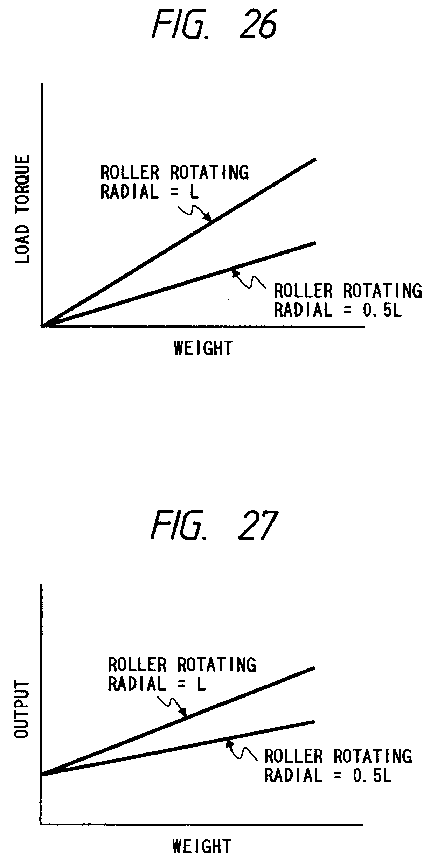

As described above, when the turn table 102 is driven by the drive motor 160, the weight of a cooked article 105 on the turn table 102 is converted into a load torque, which acts on the drive motor, under given proportional conditions as shown in Fig. 26, for example, by means of the rollers 103 as the torque converting means. The converted load torque of the drive motor is detected by the load detecting means. The proportional condition when the load-torque conversion is carried out is properly altered by moving the rollers 103 in the radial direction by the torque conversion rate adjusting mechanism, i.e., the roller sliding mechanism. As a result, plural types of weight-load conversion curves are gained as shown in Fig. 26.

The weight-load torque conversion proportional condition is varied in accordance with various measuring conditions, such as the weight of the cooked article 105, so as to obtain the best measuring results at all times. In a case where a high resolution is required, for example, when a cooked article 105 of light weight is weighed or a cooked article 105 is thawed, the rollers 103 are moved radially outward for the load detection. When a cooked article 105 of heavy weight is weighed, the rollers 103 are radially moved to the inner side.

The weight of the cooked article 105 is indirectly measured in terms of specific output values on the basis of the detected load torque, from the correlation of the load torque and the weight (Fig. 27).

While the present invention has been described in the form of the fourth embodiment as a load detecting means for detecting a load of the synchronous motor, the invention may variously be changed, modified, and altered within the scope of the invention. For example, the torque conversion rate adjusting mechanism may be realized by a means for changing friction of the rollers, although it is the roller sliding mechanism in the above-mentioned embodiment.

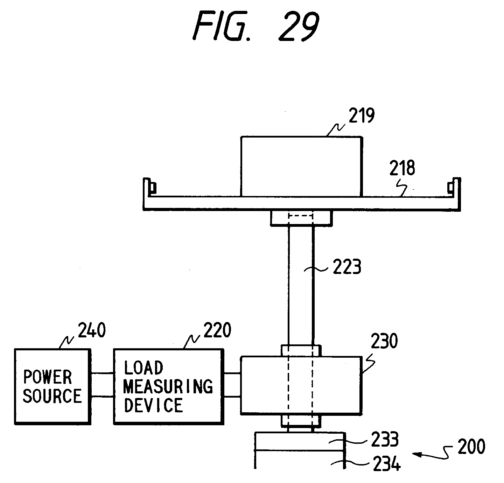

Another torque converting means applicable for the above-mentioned load detecting means will be described with reference to Fig. 29. As shown, a friction plate 233 is mounted on the bottom end of a rotary shaft 223 of a turn table 218. The friction plate 233 is brought into frictional contact with a rotary shaft receiving table 234. The weight of a cooked article 219 or an article under weight measurement is converted into a load torque by a friction caused between the friction plate 233 and the rotary shaft receiving table 234.

In connection with the load converting means, in the third embodiment, as already described with reference to Figs. 8 through 11, three rollers 103 are mounted on the underside of the turn table 102. These rollers roll on the base table 101. If required, these rollers 103 may be rotatably mounted on the upper sided of the base table 101, and the turn table 102 is supported by the rollers 103.

As described above, in the load detecting means according to the fourth embodiment of the present invention, an article supporting table with an article located thereon is turned by a drive motor (synchronous motor). A torque converting means converts a weight of the article on the table into a load torque acting on the drive motor. A load detecting coil attached to the drive motor detects the converted load torque. The relationship between weights and load torques are previously obtained. The load detecting means obtains the weight of the article referring to the weight-load torque relation. Therefore, the construction of and the signal processing by the load detecting means are extremely simplified. An improved load detecting accuracy is secured.

The detecting coil is disposed so as to cross both the alternating magnetic field developed by the drive coil of the synchronous motor and the magnetic field by the rotor. With the detecting coil thus disposed, the load detecting means produces a signal of which the amplitude is monotonously decreased with respect to a variation of the load of the motor. Therefore, the construction of and the signal processing by the load detecting means are extremely simplified, so that the size and cost of the load detecting means are reduced.

Fifth embodiment

The conventional weight detecting device used for an electromagnetic cooker inherently suffers from the following problems. A spring assembled into the weight detecting device will be permanently strained when the device is used for a long time. In this respect, an aging error is inevitably caused in the weight detecting device. A variation of the power source voltage causes the oscillating frequency to greatly vary.

In this circumstance, fifth embodiment of the present invention provides a load detecting device for detecting a load of a synchronous motor in a weight detecting device which is capable of detecting a load torque acting on the motor from a basic characteristic of the motor without using a spring, and minimizing a frequency variation by a variation of the power source voltage.

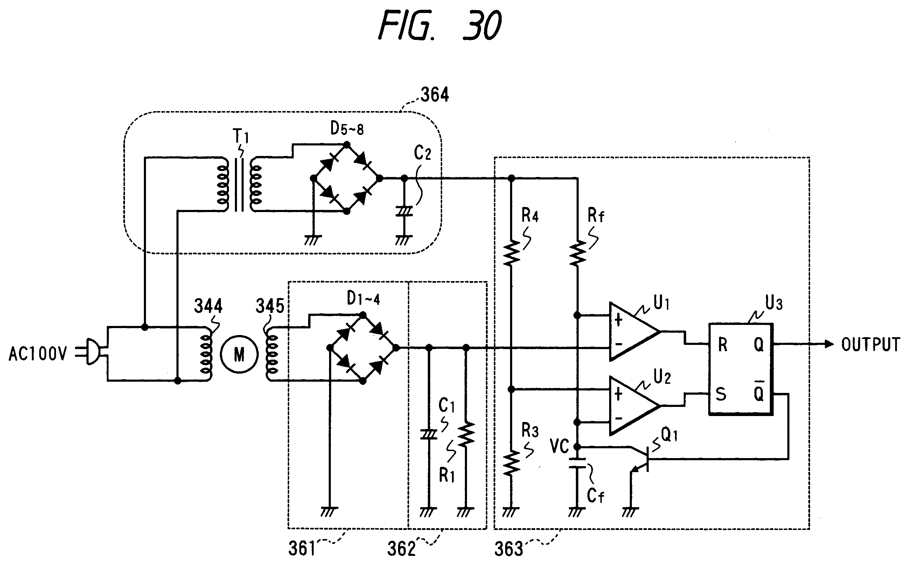

The load detecting device for detecting a load of the synchronous motor according to the fifth embodiment will be described with reference to Figs. 30 to 35.

The construction of a drive section for a synchronous motor and its related portions, and the electric and magnetic operations of the synchronous motor have already been described in connection with the fourth embodiment. Hence, no further description of them will be given here.

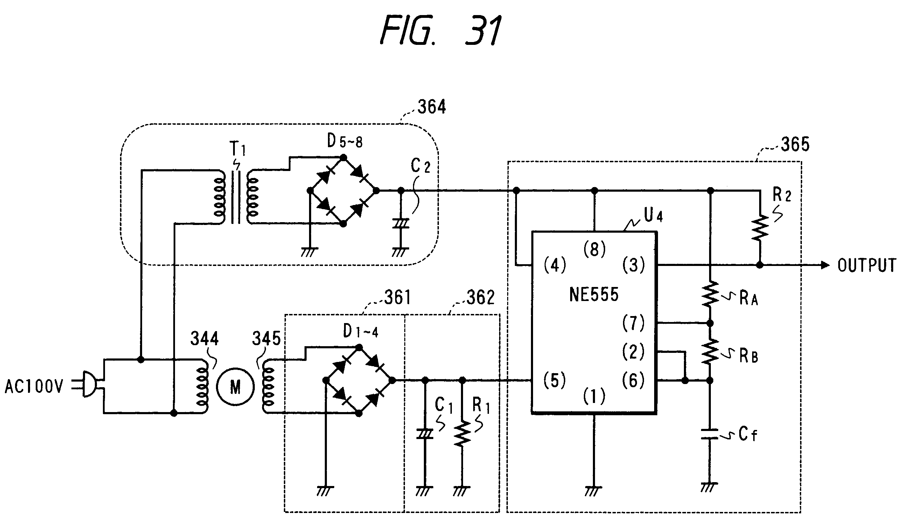

A load detecting device according to the fifth embodiment of the present invention is shown in Fig. 30. Basically, this device functions to convert the amplitude of a signal, which is obtained from a synchronous motor, into a variation of the frequency. The effective voltage of an AC signal may easily be obtained by full wave rectifying it by a diode bridge rectifier and smoothing the rectified one by a capacitor. Where a computer is used for signal processing, a variation of the frequency rather than a variation of the voltage is preferred. When the frequency variation is used, the voltage variation is converted into a variation of the frequency of a rectangular wave signal with a preset carrier frequency by a V/F converter. Such a signal processing can be carried out by using a CR self-oscillating circuit (referred to as an oscillator circuit) as shown in Fig. 30. The oscillator circuit of Fig. 30 may be substituted by an oscillator circuit 365 using an IC package, NE555, manufactured by SIGNETEX corporation (now PHILLIPS corporation) shown in Fig. 31. Any other suitable circuit may be used for the Fig. 30 circuit, as a matter of course. The oscillator circuit using the NE555 will be described later. The circuit performance of the Fig. 31 circuit is inferior to the Fig. 30 circuit.

In the description of the Fig. 30 circuit to follow, circuit constants will be used for designating the circuit components. The load detecting device of Fig. 30 is made up of a rectifier circuit 361, a smoothing circuit 362, an oscillator circuit 363, and a power source 364 for the oscillator circuit. The rectifier circuit 361 includes a bridge rectifier circuit consisting of diodes D1 to D4. The smoothing circuit 362 includes capacitors C1 and R1. The oscillator circuit 363 includes two comparators U1 and U2, an RS flip-flop U3, a transistor Q1, resistors Rf, R3 and R4, and a capacitor Cf. The oscillator circuit 363 is supplied with an electric power from the power source 364. The resistor R1 of the smoothing circuit 362 provides a path through which the capacitor C1 appropriately discharges so that the smoothed voltage follows a variation of the load. In the circuit construction where the resistor R1 is not used, the capacitor C1 is discharged through the input of a comparator U1. A response of the circuit to a load variation is slow.

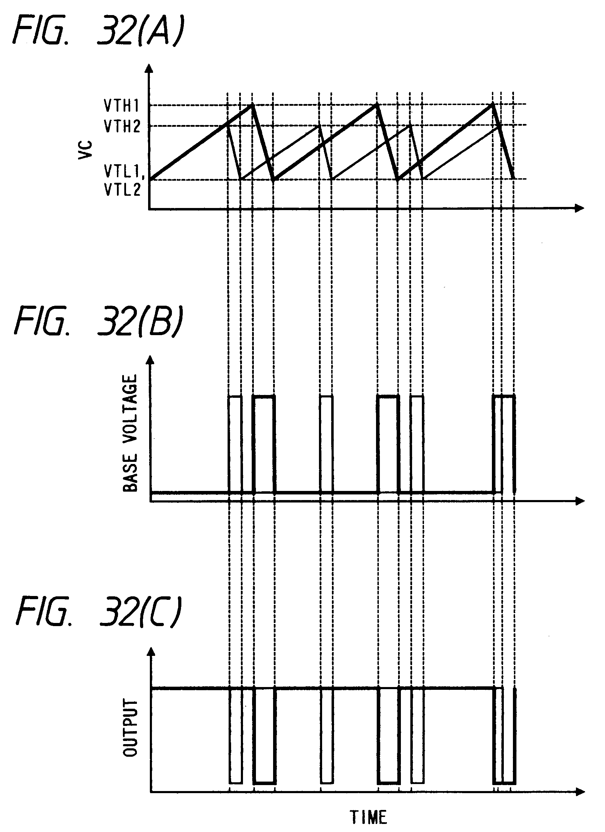

The operation principle of the oscillator circuit 363 will be described with reference to Figs. 30 and 32. Figs 32 (A) to (C) are timing chart showing signal waveforms at key portions in the Fig. 30 circuit. The oscillator circuit 363 oscillates through the charge/discharge operation of the capacitor Cf, the resistor Rf, and the discharge transistor Q1.

An AC signal output from the detecting coil 345 of a synchronous motor M is converted into a DC signal VTH1 by the combination of the rectifier circuit 361 and the smoothing circuit 362. The DC signal is connected to a negative input terminal ((-) terminal) of the comparator U1 in the oscillator circuit 363. A positive input terminal (( + ) terminal) of the comparator U1 is connected to a first terminal of the capacitor Cf. The power source 364 feeds current through the resistor Rf to the first terminal of the capacitor Cf. The first terminal of the capacitor Cf is further connected to the collector of the transistor Q1, and a (-) terminal of the comparator U2.

A ( + ) terminal of the comparator U2 is connected to a voltage divider consisting of the resistors R3 and R4. The voltage divider converts the voltage of the power source 364 to a voltage VTL1 (= Vps (power source voltage) x R3/(R3 + R4)). The voltage VTL1 appears at the ( + ) terminal of the comparator U2.

The transistor Q1 is turned on and off by a signal at the bar Q terminal of the RS flip-flop U3. A state of the RS flip-flop U3 is toggled by the output signals of the comparators U1 and U2. The second terminal of the capacitor Cf and the emitter of the transistor Q1 are both earthed. Voltage at the first terminal of the capacitor Cf, which is connected at that terminal to the comparators, is denoted as VC. The oscillating operation of one period of the oscillation of the oscillator circuit after the oscillation settles down and is in a stationary state, will be described since description of an instable operation of the oscillator circuit immediately after the oscillation starts is not required for explanation of the present invention.

The oscillator circuit 363 operates in two modes. In the first mode, the capacitor Cf is charged. In the second mode, it is discharged. These operation modes are automatically toggled to oscillate.

The first or charge mode will first be described. The charging of the capacitor Cf starts on the instant that the transistor Q1 is turned off. The transistor Q1 is turned off when the RS flip-flop U3 is set and hence the bar Q terminal is "0" in logic level. The RS flip-flop U3 is set by the comparator U2. The comparator U2 outputs a set signal when the terminal voltage VC of the capacitor Cf is lower than the voltage VTL1. The oscillator circuit 363 before the charging state is in a discharge mode to be described later. In this mode, the terminal voltage VC across the capacitor Cf is dropping. Accordingly, the voltage must approach to the voltage VTL1, from the side of the voltage VTH1. At the instant that the terminal voltage VC across the capacitor Cf is equal to the trigger voltage VTL1, the comparator U2 produces a set signal for transmission to the RS flip-flop U3. Therefore, the initial value of the terminal voltage VC across the capacitor Cf must be equal to the trigger voltage VTL1.

In this mode, no current flows since the transistor Q1 is in an off state and the respective input terminals of the comparator are at a sufficiently high impedance. Accordingly, charge is supplied to the capacitor Cf by way of the resistor Rf. With the charge supply, the terminal voltage VC across the capacitor Cf increases at a rate of a time constant of CfRf. This state is indicated by an ascending bold line in the top waveform chart for the terminal voltage VC in Fig. 32 (A) to (C). As shown, in the charge mode, the voltage across the capacitor Cf increases from the trigger voltage VTL1. The "base voltage" indicating the waveform chart in the middle in Figs. 32 (B) is the base voltage of the transistor Q1, i.e., a signal at the bar Q terminal of the RS flip-flop U3. The "output signal" indicating the waveform chart in the bottom in Fig. 32 is a signal at the Q terminal of the RS flip-flop U3. In the charge mode, the Q terminal and the bar Q terminal of the RS flip-flop U3 are "1" and "0" in logic state, as shown.

The terminal voltage VC across the capacitor Cf further increases, and reaches the trigger voltage VTH1. At this time, the comparator U1 sends a reset signal to the RS flip-flop U3, thereby resetting the RS flip-flop U3. The signal at the bar Q terminal of the RS flip-flop U3 is changed to a signal of "1". In turn, the transistor Q1 is turned on, thereby setting up a discharge mode in the oscillator circuit 363. In this mode, the capacitor Cf is discharged through the transistor Q1. The collector current Ic of the transistor Q1 is composed of a current by the charge of the capacitor Cf and a current flowing through the resistor Rf. When the collector current Ic is large, the capacitor Cf is discharged for a short period. The terminal voltage VC across the capacitor Cf drops from the trigger voltage VTH1. This voltage drop is indicated by a descending bold line in the bottom waveform chart for the output voltage in Fig. 32 (A) to (C). The logic states at the Q terminal and the bar Q terminal of the RS flip-flop U3 are respectively "1" and "0" as shown in the waveform charts of the middle and the bottom in Fig. 32 (A) to (C). Thus, in the oscillator circuit, the voltage across the capacitor Cf swings between the trigger voltages VTH1 and VTL1 through the operations of the comparators U2 and U3.

How a variation of the amplitude of an AC voltage input to the oscillator circuit 363 varies the oscillating frequency of the oscillator circuit will be described. When a load acting on the rotor of the synchronous motor M increases, and the amplitude of the AC signal output from the detecting coil 345 decreases, the frequency of the oscillator circuit 363 increases. The reason for this will be described. As seen from the above description, a decrease of the amplitude of an AC signal from the detecting coil 345 leads to a decrease of the trigger voltage of the comparator U1. If the trigger voltage VTH1 decreases to voltage VTH2, the voltage across the capacitor Cf swings between the trigger voltages VTH2 and VTL2 (or VTL1) as indicated by thin lines in the top waveform chart in Figs. 32 (A) to (C) since the oscillator circuit oscillates on the basis of the same principle as mentioned above. Accordingly, the toggle period of the set/reset of the RS flip-flop U3 is shortened or the oscillating frequency is increased.

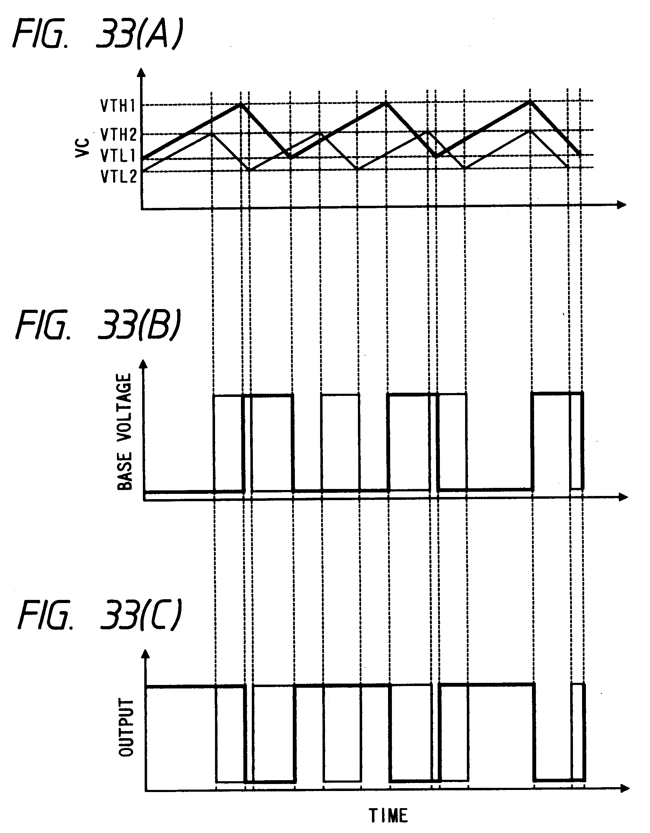

The operation of the oscillator circuit using the NE555, manufactured by PHILLIPS corporation will be described with reference to Figs. 31 and 33. The NE555 oscillator circuit oscillates on the basis of the principle, which is substantially the same as the oscillation principle of the Fig. 30 circuit. The difference of the NE555 oscillator circuit from the Fig. 30 circuit resides mainly in the method of setting the trigger voltages and provision of a discharge adjusting resistor RB. Accordingly, the timing chart of Fig. 32 (A) to (C) for the Fig. 30 circuit is different from that of Figs. 33 (A) to (C) for the Fig. 32 (A) to (C) or NE555 oscillator circuit, as seen when comparing these timing charts. In the NE55 oscillator circuit, or the oscillator circuit designated by reference numeral 365 in Figs. 32 (A) to (C), the trigger voltages for the comparators, which correspond to the comparators U1 and U2 in the Fig. 30 circuit, are formed by dividing a power source voltage VCC by three resistors R2, RA, and RB. The trigger voltage to the comparator corresponding to the comparator U1 is (2/3)VCC, and the trigger voltage to the comparator corresponding to the comparator U2 is (1/3)VCC. A DC voltage output from a smoothing circuit 362 is directly connected to a branch point of the voltage (2/3)VCC. Accordingly, the internal resistance is low, and hence the sensitivity of the Figs. 32 (A) to (C) circuit is inferior to that of the Fig. 30 circuit.

A circuit connection on the capacitor Cf in the NE555 oscillator circuit in Fig. 31 is also somewhat different from that in the Fig. 30 circuit. A resistor RA in the NE555 oscillator circuit corresponds to the resistor Rf in the Fig. 30 circuit. A resistor corresponding to the discharge adjusting resistor RB in the NE555 oscillator circuit is not found in the Fig. 30 circuit. The discharge adjusting resistor RB is used for adjusting a discharging time of the capacitor Cf when the oscillator circuit is in the discharge mode. The collector of the transistor Q1 in the Fig. 30 circuit corresponds to a pin (7) of the NE555 oscillator circuit. In the oscillator circuit 365 using the NE555 oscillator circuit, the trigger voltages are thus determined by a power source voltage and the DC signal from the smoothing circuit 362. Further, the DC signal from the smoothing circuit 362 affects not only the upper limit trigger voltage VTH1 but also the lower limit trigger voltage VTL1. Further, provision of the discharge adjusting resistor RB increases the discharge time, thereby forming waveforms as shown in the timing chart shown in Figs. 33 (A) to (C). For the above reasons, it is suggestible to use the oscillator circuit 363 in Fig. 30 rather than the oscillator circuit 365, or the NE555 oscillator circuit, shown in Fig. 31 if somewhat increase of the cost is allowed.

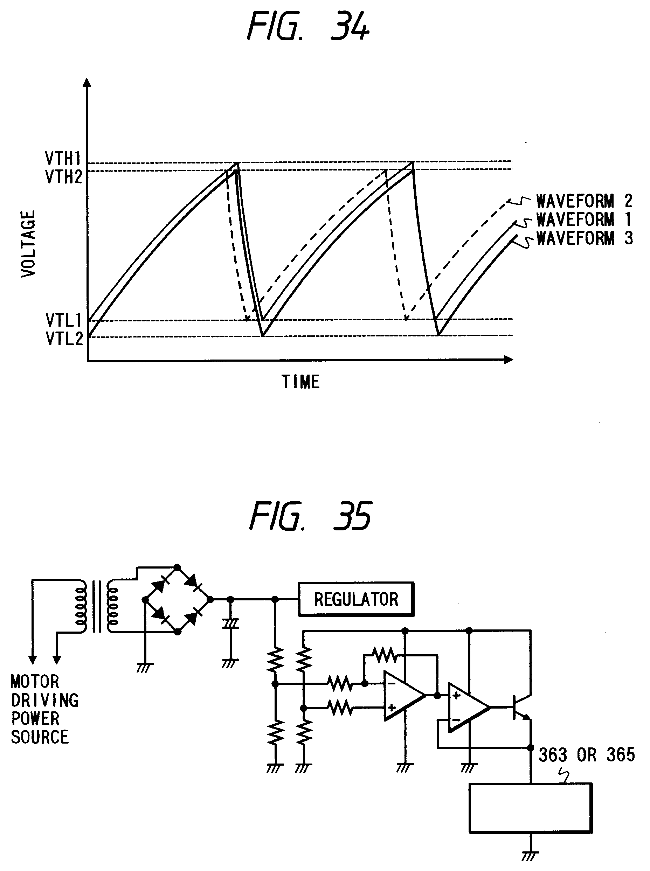

Problem arises when the voltage of the motor drive power source varies. The description of the operation of the load detecting device has been made on the presumption that there is no variation of the power source voltage. Because of this, the power source for the oscillator circuit was not referred to. This will be described with reference to Figs. 23A, 30 and 34. Fig. 34 shows waveforms of the power source voltage VCC across the capacitor Cf. A waveform 1 shown in Fig. 34 shows the basic operation of the oscillator circuit in the load detecting device when the output signal of the detecting coil 345 is in a signal level. As shown, the waveform 1 varies between the trigger voltages VTH1 and VTL1.

In the circuit construction shown in Fig. 30, as described above, the trigger voltage VTH1 depends only on the output signal of the detecting coil 345. The trigger voltage VTL1 depends only on the voltage of the power source 364. If the voltage of the motor drive power source drops, the current I1 shown in Fig. 23A decreases. The magnitude $\omega MI1$ of the vector of an electromotive force by the mutual inductance M (Fig. 23A) is also decreased. As a result, the voltage $(r2 + RL)I2$ of the resistive components is also decreased. Since the voltage RLI2 is a signal input to the circuit, the voltage drop of the motor drive power source leads to the decrease of the trigger voltage VTH1. In the Fig. 30 circuit, it is impossible to discriminate this voltage drop from the voltage drop caused by the increase of the load torque unless some measure to discriminate them is provided. Accordingly, this voltage drop leads to increase of the oscillation frequency. This state that when the power source voltage drops, the oscillating frequency is increased can be understood from the waveform diagram of Fig. 34. As shown, only the trigger voltage VTH1 drops to the trigger voltage VTH2, so that the terminal voltage VC across the capacitor Cf takes the waveform as shown in Fig. 34.

This frequency increase may remarkably be reduced by decreasing the trigger voltage VTL1 to the trigger voltage VTL2. The quantity of the correction of the voltage VTL1 to the voltage VTL2 is proportional to the quantity of a variation of the voltage of the motor drive power source. Therefore, this may be realized by designing the power source for the oscillator circuit so that the quantity of the correction of the trigger voltage VTL1 is substantially proportional to the quantity of a variation of the voltage of the motor drive power source. To realize this at more reduced cost, one of the possible ways is to construct the power source for the oscillator circuit using a transformer T1, rectifying elements D5 to D8, and a capacitor C2 as the power source 364 of Fig. 30. Such a DC power source is located in the prestage of a voltage regulator in an electronic circuit. Therefore, in case where the voltage before it is regulated is the voltage required for the oscillator circuit 363, there is no need of additional provision of it. And the voltage correction object may readily be achieved. As a result, the Fig. 30 circuit functions to subtract the voltage dependency of the motor drive power source from the output signal of the detecting coil 345.

In Fig. 30, there is not illustrated a power source for the comparators U1 and U2, and the RS flip-flop U3. The power source 364 may supply electric power directly or through a voltage regulator to these circuits. Use of the voltage regulator is more preferable as a matter off course because of little influence by it on the peripheral circuit.

The NE555 oscillator circuit of Fig. 31 will be described on the subject matter under discussion, viz., the voltage variation of the motor drive power source. The trigger voltage setting method of the NE555 oscillator circuit is different from that of the Fig. 30 oscillator circuit. The trigger voltage is determined through a complex action of the voltage of the power source 364 and the DC voltage in connection with the detecting coil 345. Accordingly, the operation of the NE555 oscillator circuit is complicated. However, the phenomenon as described referring to Fig. 30 also takes place in the NE555 oscillator circuit in Fig. 31. Accordingly, the above-mentioned means to cope with the voltage variation of the motor drive power source is also applicable for the NE555 oscillator circuit shown in Fig. 31. For ease of adjustment, it is preferable that the circuit constructions of the oscillator circuit power sources 364 shown in Figs. 30 and 31 are each substituted by a circuit construction as shown in Fig. 35. In this case, somewhat increase of the cost to manufacture is unavoidable, though.

As described above, the load detecting device according to the fifth embodiment of the present invention is able to detect a load of a synchronous motor without using a mechanical means of which the major physical property is easy to vary with time, such as a spring. This ability of the load detecting device is realized by using a voltage signal derived from the detecting coil of the synchronous motor, which is arrayed so as to cross a magnetic field developed by the drive coil and a magnetic field of the rotor. The amplitude of the voltage signal output from the detecting coil thus arrayed is monotonously decreased with respect to a variation of the load. Further, the load detecting device of the invention is able to minimize a detection error caused by a variation of the output voltage of the motor drive power source. This ability is realized by uniquely interlocking the trigger voltages in the CR self-oscillation circuit with the voltage of the motor drive power source.

Sixth embodiment

In a conventional weight detecting device for an electromagnetic cooker, a flexure of a spring of a spring weighing machine incorporated into the cooker is picked up in the form of a corresponding electrical quantity, such as a voltage, by using a coil or a capacitor. The voltage representative of the flexure is converted into a variation of the frequency of an electrical signal.

A spring constant of the used spring varies with time and variation of ambient temperature. The electrical component, such as the coil or the capacitor, also has a temperature dependency. The aging of the physical property of the spring, and the temperature dependency of the spring and the electrical componentcomplicatedly act to create a special temperature dependency in the relationship between the weight and the converted frequency. It is very difficult to remove the special temperature dependency by the circuiting technique or the weight-frequency conversion algorithm.

In this circumstance, the present invention provides a novel and unique load detecting circuit for a synchronous motor in an electromagnetic cooker of the load-frequency conversion type, which produces a load detect signal substantially free from the adverse influence by the special temperature dependency. The load detecting circuit is realized without any special detecting element.

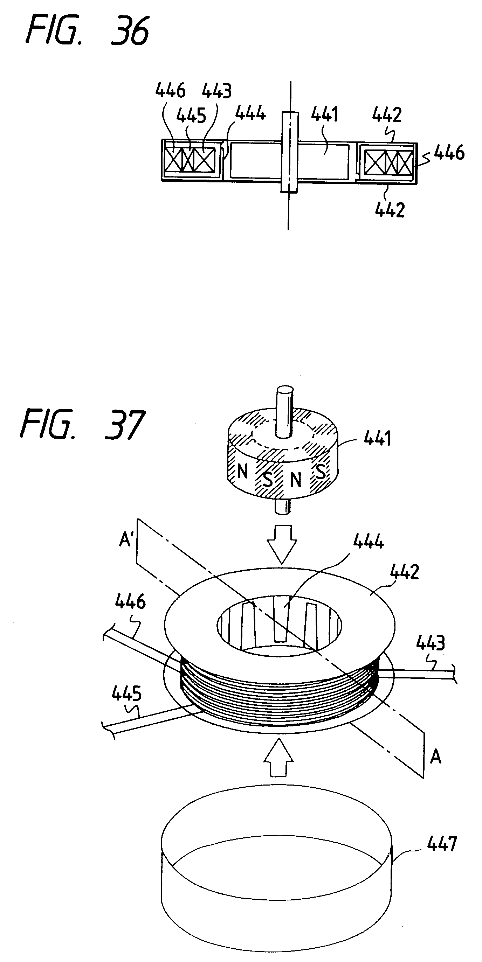

The sixth embodiment of the present invention in which the load detecting circuit according to the present invention is applied to the mechanism of a turn table in an electromagnetic cooker, will be described with reference to Figs. 36 to 47.

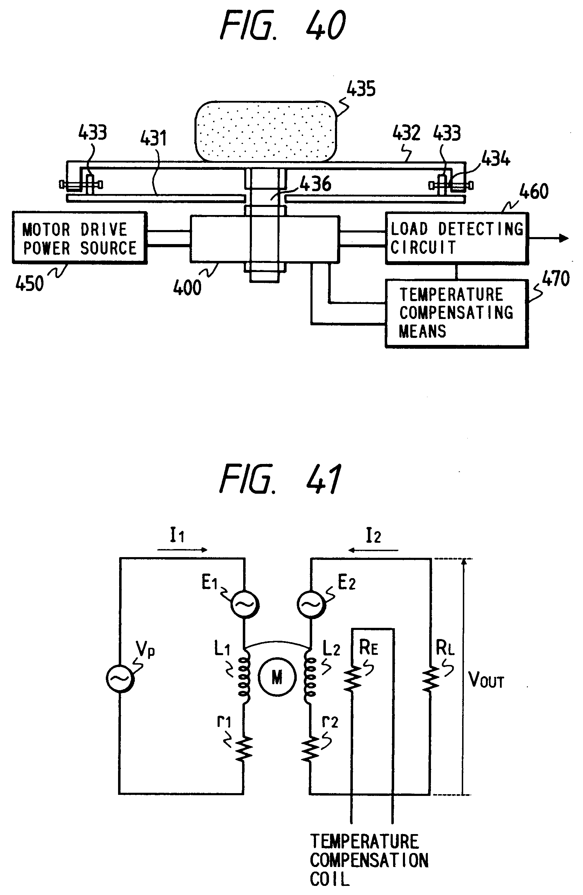

Reference is made to Fig. 40. As shown, a disc-like turn table 432 is rotatably supported by a plural number of rollers 433 on a disc-like support table 431. The rollers 433 are respectively mounted on rotary shafts 434, which are firmly attached to the flange of the turn table 432. A synchronous motor 400 is mounted on the lower side of the support table 431 by means of suitable fixing means, not shown. An output shaft 436 of the synchronous motor 400 is firmly attached at the top end to the center of the lower side of the turn table 432. The output shaft 436 of the synchronous motor 400 passes through a center hole of the support table 431 and is coupled at the bottom end with the synchronous motor 400 by way of a reduction gear mechanism. A cooked article 435 is located on the turn table 432. With this mechanism,

15

when the synchronous motor 400 is turned, the turn table 432 bearing the cooked article 435 thereon is turned while being supported by the rollers 433 on the support table 431.

A motor drive power source 450 and a load detecting circuit 460 with a temperature compensating means 470 are connected to the synchronous motor 400. The synchronous motor, the load detecting circuit, and the temperature compensating means will be described in detail hereinafter.

In Figs. 36 and 37 showing the structure of the synchronous motor 400, a rotor 441 is a cylindrical permanent magnet. The rotor 441 is magnetized so as to have N and S poles alternately arrayed at fixed pitches as shown. A disc-like stator 442 with a cylindrical, comb-shaped array of magnetic poles 444 surrounds the rotor 441 with a gap therebetween. In the array of the magnetic poles 444, the upward and downward directed, protruded poles are alternately arrayed along the inner circumference of the stator 442. The pitch of the angular array of the protruded poles directed upward or downward is equal to the pitch of the angular array of the N or S poles of the rotor 441.

A drive coil 443 for exciting the magnetic poles 444, a cancel-wound temperature compensation coil 445, and a detecting coil 446 are wound on the comb-shaped array of magnetic poles 444. The cancel winding of the temperature compensation coil will be described later. The motor drive power source 450 feeds an alternating current to the drive coil 443.

The upper and lower parts of these coils 443, 445, and 446 are magnetically shielded by the stator 442 made of soft magnetic material, and the outer sides of these coils are shielded by a shield case 447 made of soft magnetic material.

The magnetic flux from the drive coil 443 starts from the lower part of the stator, passes through the shield case and the upper part of the stator. And the magnetic flux enters the protruded pole extended from the upper side in the comb-shaped array of magnetic poles 444, leaks to the protruded pole adjacent to the former, and are gathered again by the protruded poles extended from the lower side in the comb-shaped array of magnetic poles 444. Finally, it returns to the lower part of the stator. Since the drive coil 443 is excited by an alternating current, the magnetic flux therefrom traces the reverse magnetic path. Accordingly, an alternating magnetic field is developed in the comb-shaped array of magnetic poles 444, in synchronism with the frequency of the alternating current fed from the motor drive power source 450. The rotor 441 is rotated guided by the alternating magnetic field. The number of revolutions of the rotor 441 is proportional to the frequency of the alternating current of the motor drive power source 450.

It is for this reason that the motor thus constructed is called a synchronous motor.

Thus, the detecting coil 446 is turned so as to cross the exciting magnetic field by the drive coil 443 and the magnetic field by the rotor 441. Therefore, an inducing current by the magnetic field from the drive power source and another inducing current by the magnetic field of the rotor 441 flows through the detecting coil 446. A load torque acting on the rotor 441 is detected depending on the phase relationship between these inducing currents.

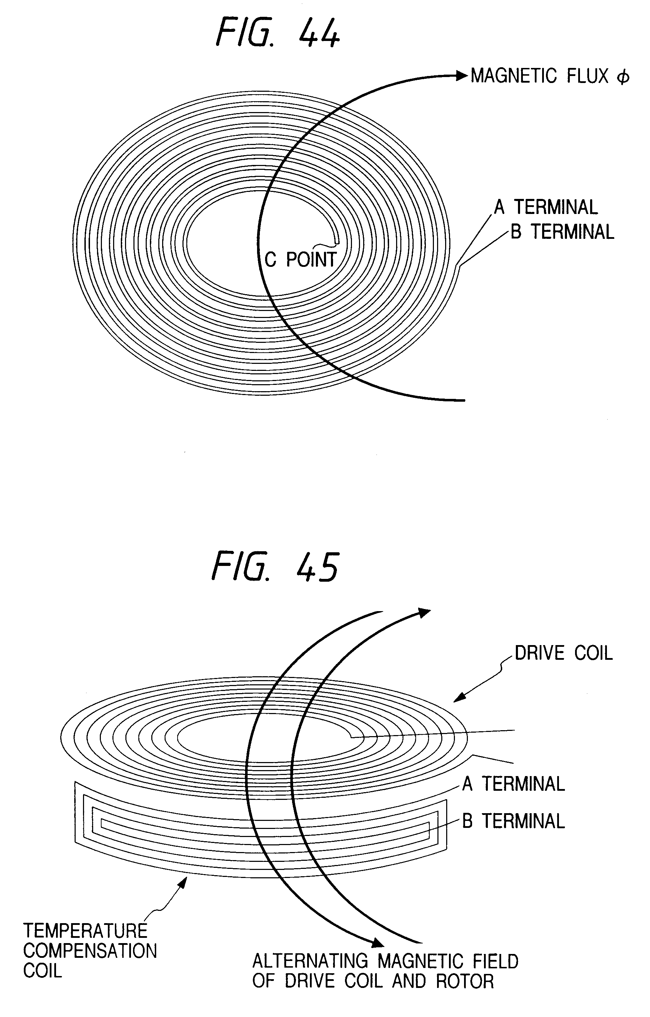

Fig. 44 is a diagram for explaining the cancel winding. Only a resistive component depending on ambient temperature is required for the temperature compensation coil 445. This coil must be disposed so as to be completely isolated from an external magnetic field or it must be coiled so as to neutralized the external magnetic field, if applied thereto. One of the possible ways to realize this is to form the temperature compensation coil by a called cancel winding. The cancel winding is equivalent to two coils, which are made of the same material and the same shape, disposed so as to develop the same magnetic fields, and connected in series in an opposite phase fashion. Actually, as shown in Fig. 44, two conductive wires are wound on a bobbin by a necessary number of turns such that one end (denoted as C) of the conductor wire pair is interconnected, while the other ends (denoted as A and B) of the wire pair are used as output terminals.

The currents induced into the two coils are exactly equal in amplitude and out of phase. In the thus connected coils, the inducing currents can be completely neutralized. The temperature compensation coil is used for sensing a temperature in the motor in the form of a variation of the coil resistance, not for picking up a variation of the magnetic field. To this end, the temperature compensation coil may be arranged for the drive coil as shown in Fig. 45. In the arrangement of the temperature compensation coil, the magnetic field crossing the coil is theoretically zero, and the coil produces only a resistance variation caused by a temperature variation.

This coil and the coil by the cancel winding may be combined to form the temperature compensation coil. It is evident that the temperature compensation coil may take any other form than the coil. However, when it takes a form other than the coil, it is very difficult to control its resistance. On the other hand, if it takes a form of the coil, its resistance may easily be controlled using the number of turns on a bobbin.

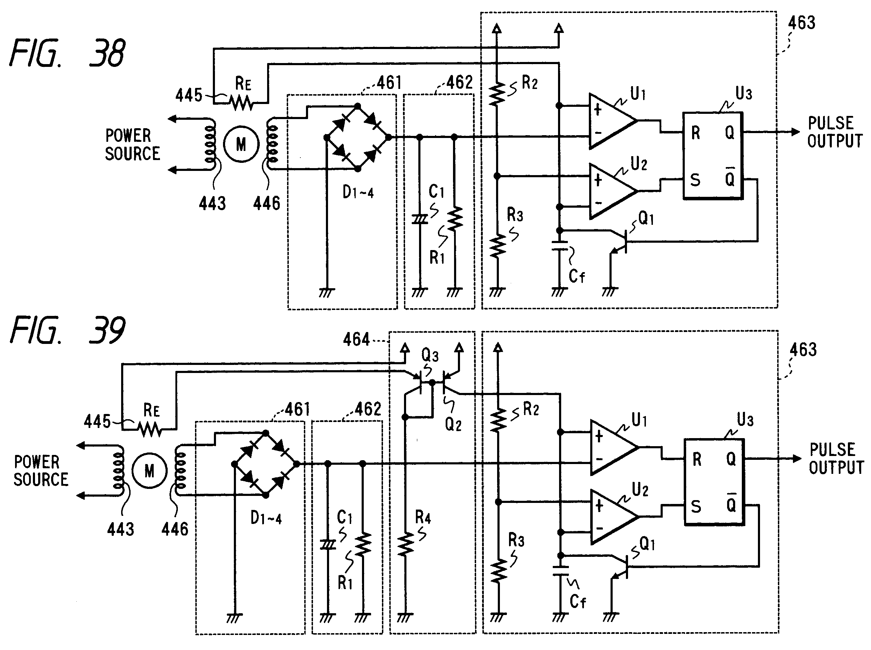

The load detecting circuit 460, as shown in Fig. 38, is connected to the detecting coil 446 and the temperature compensation coil 445 within the synchronous motor 400. The load detecting circuit 460 is made up of a rectifier circuit 461 for rectifying an AC signal derived from the detecting coil 446, a smoothing circuit 462 for smoothing the output signal of the rectifier circuit, and a CR self-oscillation circuit 463 of which the oscillating frequency varies depending on the DC output voltage of the smoothing circuit 462. A temperature compensation coil 445 is connected to a charge current source of a capacitor Cf, which determines an oscillation time constant of the CR self-oscillation circuit 463. Only the temperature compensation coil 445 may be connected to the charge current source or the combination of the temperature compensation coil 445 and a current mirror circuit 464 may be connected to the same, as shown in Fig. 39. The temperature compensating operation of the temperature compensation coil 445 will be described later.

The electromagnetic operation of the load detecting circuit for the synchronous motor will be described. In the synchronous motor coupled with the load detecting circuit, which was already described referring to Fig. 36, the drive coil 443 and the detecting coil 446 form a kind of transformer. An inducing current by the magnetic field from the rotor 441 is caused in the detecting coil 446. This inducing current is caused also in the drive coil 443. The inducing current is usually expressed in terms of corresponding voltage. The voltage corresponding to the inducing current is called a back electromotive force.

The synchronous motor may equivalently be expressed as shown in Fig. 41 in consideration of the internal resistance of the drive coil 443 and the detecting coil 446. In the equivalent circuit, L1 and r1 indicate the self-inductance and the internal resistance of the drive coil 443. L2 and r2 indicate the self-inductance and the internal resistance of the detecting coil 446. M indicates a mutual inductance between the drive coil 443 and the detecting coil 446. E1 indicates a back electromotive force by the rotor 441, and E2, a back electromotive force E2 by the drive coil 443.

A power source Vp for the motor drive power source 450 is connected to the drive coil 443. The load detecting circuit 460 is connected to the detecting coil 446. In Fig. 41, its internal resistance is expressed as a load resistance RL. A current I1 flows in the closed loop including the detecting coil 446. A current I2 flows in the closed loop including the detecting coil 446. The temperature compensation coil 445, exactly consisting of two coils, is simply expressed as a resistor RE in Fig. 41. The resistor RE has no relation to the basic operation of the load detecting means. This resistor RE will be described later, in connection with the temperature compensating means.

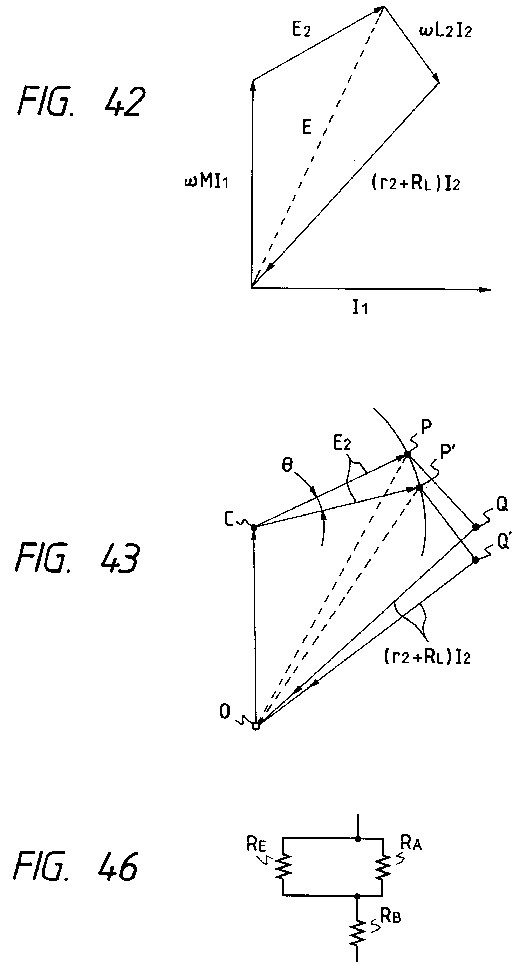

The equivalent circuit shown in Fig. 41 will be described with reference to Figs. 42 and 43 showing voltage vector diagrams.

Fig. 42 is a vector diagram showing phase relationships of voltage vectors when viewed from the detecting coil 446 under a condition that a given load torque is coupled with the rotor 441. The current I1 of the drive coil 443 lies on the x axis. $\omega MI1$ indicates an inducing current by the current of the motor drive power source 450 through the mutual inductance M of the drive coil 443 and the detecting coil 446. A back electromotive force E2 by the detecting coil 446 is caused at a phase angle relating to the load torque. Since the circuit may be considered as a closed loop, the remaining voltage must be generally represented by a vector E.

The vector E consists of a vector component by the inductance L2 of the detecting coil 446 and a vector component by the internal resistance r2 and RL. The voltage vector by the inductance component is delayed $\pi/2$ (90°) behind the voltage vector by the resistive component. Thus, as shown in Fig. 42, the vector E may be dissolved into a vector of an inducing current $\omega L2I2$ and a vector of a voltage drop (r2 + RL) x I2 by the resistive component, these vectors being perpendicular to each other. A ratio of the respective sides of a rectangular triangle formed by the voltage vector E, the inducing current vector $\omega L2I2$, and the voltage drop vector (r2 + RL)I2 is uniquely determined by the electric characteristic. The ratio is irrespective of the angle and amplitude of the back electromotive force E2. The signal that load detecting circuit 460 detects is the component RLI2 of the voltage drop (r2 + RL)I2.

As known, in the synchronous motor, when a load torque of the rotor increases, the rotation phase of the rotor delays behind the phase of the motor drive current. This phenomenon appears in the phase delay of the back electromotive force E1 or E2. In Fig. 42, it may be depicted as a rotation of the back electromotive force E2 about the tip top of the inducing current vector $\omega MI1$ at a negative angle. Fig. 43 is a vector diagram showing the relationship of the vector E2, and the vector E and its components when the load torque is further increased, while being illustrated overlaid on the vector diagram of Fig. 42. It is confirmed that in an actual motor, when the load torque is increased, the amplitudes of the inducing current $\omega MI1$ and the back electromotive force E2 are also somewhat increased, but the increase of these amplitudes is much smaller than a phase variation. Therefore, the variation of these amplitudes is neglected in this description.

When the back electromotive force E2 is turned at an angle $\theta$, a point P moves to a point P'. A rectangular triangle $\triangle OP'Q'$ is similar to a rectangular triangle $\triangle OPQ$. Then, a point Q moves to a point Q'.

When back electromotive force E2 is turned at a negative angle, the magnitude of the voltage vector E is reduced from ¦OP¦ to ¦OP'¦. Therefore, the magnitude of (r2 + RL)I2 is also reduced at the same rate. That is, ¦OQ¦ is reduced to ¦OQ'¦. Thence, the voltage the load detecting circuit 460 detects is also reduced at the same rate. At this time, the phase angle is also varied, the phase difference may be detected for the load detection.

As seen from Fig. 43, to detect the phase difference, the amplitude of the back electromotive force E2 must be large. To increase the back electromotive force E2 is to increase the number of turns of the detecting coil 446. However, detection of the vector OQ, viz., the amplitude of the voltage detected by the load detecting circuit 460, is advantageous in that a large signal variation is gained, with a smaller number of turns of the detecting coil.

The thus gained load detecting signal is an AC signal of the frequency equal to the power source frequency. The magnitude of the load torque is gained as the amplitude of the AC signal. One of the possible circuits for converting the amplitude of such an AC signal to the frequency of a rectangular wave signal, is shown in Fig. 38. The operation of the circuit will be described. In the circuit, U1 and U2 indicate comparators. U3 indicates a monostable multi-vibrator, such as an RS flip-flop. The load torque is obtained in the form of an amplitude of the AC signal. Thence, the AC signal is converted into a corresponding DC signal by the combination of a rectifier circuit 461 and a smoothing circuit 462, as shown in Fig. 38.

At this stage, the load torque is expressed in terms of the DC voltage. Therefore, a designer may convert the voltage into a corresponding frequency by using a voltage-frequency converter (VF converter) or a voltage controller oscillator (VCO). A simple method for the VF conversion is to use a CR self-oscillation circuit oscillating at periods each equal to the discharge time of the capacitor, as shown in Fig. 38. The oscillation principle of the CR self-oscillation circuit is such that a capacitor is charged by a constant current source, when the voltage across the capacitor reaches a preset value, the capacitor is discharged by another constant current source, and this process is repeated.

In the circuit of Fig. 38, the charge/discharge capacitor is a capacitor Cf. The resistor RE of the temperature compensation coil 445 serves as a constant current source for charging the capacitor. The transistor Q1 serves as a constant current source for discharging the capacitor. In this circuit arrangement, a separate temperature compensation circuit block is not used. The circuit arrangement is very simple and cost to manufacture is not large. The charge of the capacitor starts at an instant that the potential across the capacitor Cf reaches a potential as the result of dividing the potential across the capacitor Cf by the resistors R2 and R3. The discharge of the capacitor starts an instant that the potential across the capacitor Cf reaches the DC voltage output from the smoothing circuit, viz., a potential relating to the load. The division voltage by the resistors R2 and R3 must be set to be lower than the load detection voltage, as a matter of course.

It is empirically confirmed that in this circuit arrangement, an increase of motor temperature brings about increase of the internal resistance of the detecting coil 446, decrease of the magnetic flux of the stator 442 and the shield case 447, reduction of magnetic charge, and the like, and as a result, the amplitude of the load detecting signal is reduced. The amplitude reduction leads to reduction of the DC voltage after the rectifying/smoothing process, so that, if any measure is not taken, the capacitor Cf starts its discharge at an early time and the frequency of the CR self-oscillation circuit is increased. To depress the frequency increase, the current of the charging or discharging constant current source is reduced to delay the discharging or charging time.

The Fig. 38 circuit employs the former method. That is, the charging time is prolonged by only the resistance RE of the temperature compensation coil 445. If the charging time must be prolonged, the resistor RE is inserted in the collector path of the transistor Q1. The temperature compensation coil 445 is not influenced by the power source current and the magnetic field of the rotor 441 since it is wound by the cancel winding method. Therefore, the temperature compensation coil expresses a rise of the ambient temperature of the detecting coil in terms of an increase of its resistance alone.

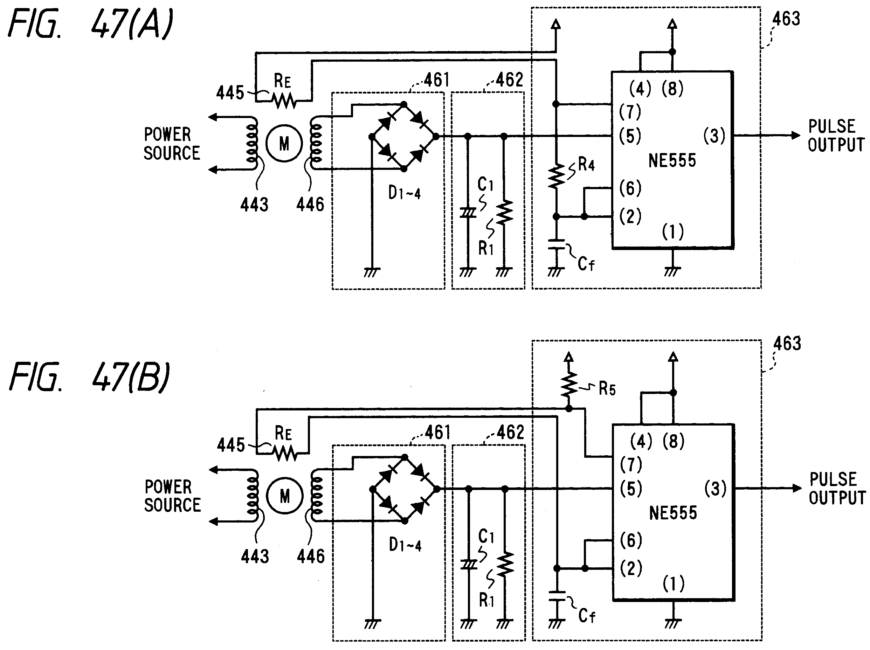

Where it is impossible to completely neutralize a temperature coefficient of the circuit with the temperature coefficient of the temperature compensation coil 445 alone, a circuit as shown in Fig. 46 may be used. In the circuit, the temperature compensation coil is combined with resistors such that a resistor RA is connected in parallel with the temperature compensation coil, and a resistor RB is connected to the resistor RA and the temperature compensation coil. This circuit including a resistor bridge provides a more reliable neutralization of the temperature coefficients.

For the temperature coefficient adjustment, when a temperature compensation coil which exhibits 200 Ω at 0°C and 208 Ω at 80 °C is used, the temperature coefficient is 500 ppm as calculated by the following equation

(208 - 200)/{200 x (80 - 0)} = 500 x 10$^{-8}$

To gain a state that 500 Ω at 0 °C and 504 Ω at 80 °C (250 ppm), the resistance values RA and RB each of ± 0 ppm are obtained using Table 1.

Table 1

| Temp. | 0 °C | 80 °C |
|---|---|---|
| RE | 200 Ω | 208 Ω |
| Total resistance | 500 Ω | 504 Ω |

The temperature coefficient at temperature 0 °C is calculated by an equation (2), and that at temperature 800 °C is calculated by an equation (3). And the resistance values RA and RB are: RA = 492.477 Ω and RB = 357.76 Ω by subtracting these two equations.

200 • RA/(200 + RA) + RB = 500
208 • RA/(208 + RA) + RB = 504

When resistors of 1 % E96 series of JIS (Japanese Industry Standards) are used, resistors of RA = 499 Ω and RB = 357 Ω may be used.

Another circuit arrangement of the load detecting circuit according to the sixth embodiment of the present invention is shown in Fig. 39. This circuit arrangement is effective when it is applied to a case where a resistance variation of the temperature compensation coil 445 is smaller than a temperature coefficient to be compensated for. The circuit arrangement amplifies a resistance variation of the temperature compensation coil 445 and converts the increased resistance variation to a variation of the charging current. As shown, a current mirror circuit 464 is inserted between the temperature compensation coil 445 and the CR self-oscillation circuit 463, and the resistor RE of the temperature compensation coil 445 is inserted in the emitter path of a reference transistor Q3 of the current mirror circuit. With this circuit arrangement, if the temperature coefficient of the temperature compensation coil 445 is smaller than a required one, the current mirror circuit adjusts it to a necessary value.

In the current mirror circuit, the temperature coefficients of Vbe of the transistors Q2 and Q3 are canceled out. Therefore, the influence by provision of the transistors Q2 and Q3 is negligible.

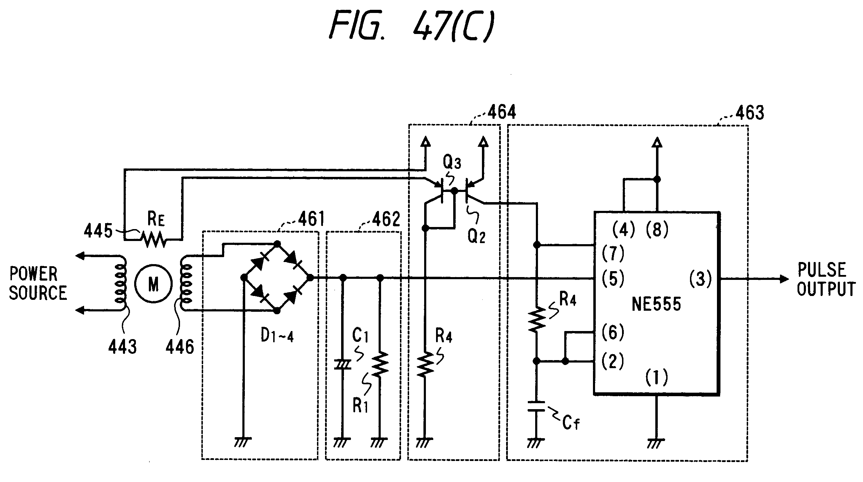

The CR self-oscillation circuits 463 in the Figs. 38 and 39 circuits may be substituted by corresponding functional circuit components of NE555, for example, manufactured by SIGNETEX corporation (now PHILLIPS corporation). Specific examples are shown in Figs. 47(A) to 47(C). The circuit of Fig. 47(A) corresponds to the Fig. 38 circuit. In the circuit of Fig. 47(B), the operation by a resistance variation owing to a temperature variation is two times as that in the 47(A) circuit since the temperature compensation coil is concerned in both the charging operation and the discharging operation. The Fig. 47(C) circuit corresponds to the Fig. 39 circuit.

In the sixth embodiment mentioned above, the load detecting circuit of the sixth embodiment is applied to the weighing machine for weighing a cooked article on a turn table in an electromagnetic cooker. The same may be applied to a stepping motor for a printer in which the drive current is adjusted while controlling the load torque.

As seen from the foregoing description, in the sixth embodiment of the percent invention, a load detecting circuit for a synchronous motor contains a temperature compensation coil wound by the cancel winding provided in the synchronous motor. A charging/discharging time of the capacitor in the CR self-oscillation circuit is increased in accordance with a resistance increase of the coil, which is due to temperature rise of the coil. Therefore, the frequency variation of the load detecting signal, which is caused by temperature variation, is minimized.

Additionally, a mechanical detector for detecting a displacement of the turn table in the axial direction is not used for the load detection. The shaft support structure is not complicated.

## Claims

1. A weight detecting device comprising:
    an article table on which an article to be measured;
    a drive motor for turning the article table;

torque conversion means for converting weight of the measured article located on the article table into a load torque acting on the drive motor under a given proportional condition;

load detecting means for detecting a load torque acting on the drive motor through the torque conversion means; and

weight measuring means for measuring a weight of the measured article according to the load torque obtained by the load detecting means, while referring to the correlation between the load torque and the load.

2. The weight detecting device according to claim 1, further comprising a torque conversion rate adjusting mechanism for changing a proportional condition when the weight is converted to a load torque.

3. An electromagnetic cooker with the weight detecting device according to claim 2, in which the article table is a turn table is rotatable about a shaft while supporting an article to be cooked or the measured article thereon,

the torque conversion means is rollers allowing the turn table to be turned, and

the torque conversion rate adjusting mechanism is a slide mechanism for moving the rollers in the radial direction with respect to the shaft of the turn table.

4. The electromagnetic cooker with the weight detecting device according to claim 3, in which a plurality of rollers are radially extended from the turn table shaft and arrayed equidistantly spaced from one another, and the slide mechanism includes an interlocking mechanism for moving the rollers in the radial direction in an interlocking manner.

5. The weight detecting device according to claim 1, in which the load detecting means consists of a load detecting coil disposed near a drive coil for the drive motor.

6. The weight detecting device according to claim 5, in which the load detecting coil is disposed so as to cross an alternating magnetic field developed by the stator of the drive motor and another alternating magnetic field developed by the rotor.

7. The weight detecting device according to claim 5, in which the weight detecting means includes a circuit for rectifying an output signal of the load detecting coil in the load detecting means and smoothing the rectified signal.

8. The weight detecting device according to claim 5, in which the weight detecting means includes a circuit for converting a variation of the rectified and smoothed voltage signal into a variation of the frequency.

9. The weight detecting device according to claim 1, in which the drive motor includes a synchronous motor.

10. A load detecting device comprising:

load detecting means for detecting a load of a synchronous motor of which the rotor is rotated in synchronism with an alternating magnetic field developed by the rotor, through an interactive action of an alternating magnetic field developed by a drive coil of a stator and the alternating magnetic field by the rotor,

wherein the load detecting means including a detecting coil disposed so as to cross the alternating magnetic field developed from the stator and the alternating magnetic field developed by the rotor.

11. The load detecting device using the synchronous motor according to claim 10, in which the load detecting means includes a circuit for rectifying an output signal of the detecting coil and for smoothing the rectified signal.

12. The load detecting device using the synchronous motor according to claim 11, in which the load detecting means includes a circuit for converting a variation of the rectified and smoothed voltage signal into a variation of the frequency.

**13.** The load detecting device using the synchronous motor according to claim 12, in which the voltage-frequency converting circuit includes a CR self-oscillation circuit in which the trigger voltages are DC signals, and

further comprising:

means for proportioning the voltage of a power source for the oscillator to the voltage of a drive power source for driving the synchronous motor.

**14.** The load detecting device using the synchronous motor according to claim 10, in which the synchronous motor includes means for compensating for a temperature error in the output signal of the detecting coil by using a temperature compensation coil wound so as to neutralize the inducing currents by the alternating magnetic fields by the drive coil and the rotor, and the temperature error compensating means is disposed adjacent to the detecting coil.

**15.** A load measuring device comprising:

a synchronous motor;

voltage/current measuring means for measuring a voltage applied to a winding a the synchronous motor and a current flowing through the winding;

power factor calculating means for calculating an effective power by multiplying the voltage and the current, and an apparent power by multiplying an effective value of the voltage and an effective value of the current, and for calculating a power factor by calculating the ratio of the effective power and the apparent power; and

load detecting means for converting the power factor calculated by the calculating means to a load of the synchronous motor, by utilizing the correlation between the load and the power factor so as to measure a magnitude of the load of the synchronous motor in accordance with the magnitude of the power factor.

**16.** The load measuring device according to claim 15, further comprising:

resistance measuring means for measuring resistance of the winding of the synchronous motor;

power factor compensating means for temperature compensating for the power factor obtained by the calculation by using the measured resistance of the winding; and

load detecting means for converting the compensated power factor to a load of the synchronous motor, by utilizing the correlation between the load and the power factor so as to measure a magnitude of the load of the synchronous motor in accordance with the magnitude of the power factor.

# FIG. 1

# FIG. 2

# FIG. 3

```
    ┌4           ┌11          31  3              ┌─────────────13
 ┌─────────┐  ┌──────────┐                    │ ┌ ─ ─ ─ ─ ─ ─ ─
 │ POWER   │  │ VOLTAGE/ │                      LOAD
 │ SOURCE  │──│ CURRENT  │──●──   (  O  )      │ DETECTING
 │         │  │ MEASURING│  │                    MEANS
 └─────────┘  │ MEANS    │──●──      32        │              ┌14
              └──────────┘                       ┌──────────┐
                    │                   ┌16     │ │ MEMORY   │
                    │         ┌──────────┐        │ CIRCUIT  │
         2          │         │RESISTANCE│      │ │          │
          ↗         │         │MEASURING │────── └──────────┘
                    │         │MEANS     │      │      │
                    │         └──────────┘             │
                    │     ┌12          ┌17     │      │    ┌15
                    │  ┌──────────┐ ┌──────────┐ ┌──────────┐
                    │  │ POWER    │ │POWER     │ │ │ LOAD     │  OUTPUT
                    └──│ FACTOR   │─│FACTOR    │─│ DETECTING │───→
                       │CALCULATING│ │COMPENSATING│ │ CIRCUIT  │
                       │ MEANS    │ │MEANS     │ │ │          │
                       └──────────┘ └──────────┘   └──────────┘
                                               └ ─ ─ ─ ─ ─ ─ ─ ─
```

# FIG. 4

POWER FACTOR (vertical axis)

TEMPERATURE (WINDING TEMPERATURE)

23

# FIG. 5

*FIG. 6*

*FIG. 7*

FIG. 8

FIG. 9

## FIG. 10

## FIG. 11

## FIG. 12

$$T = F \cdot L$$
$$F = (\rho/R + \mu \cdot r/R) \cdot L \cdot W$$

## FIG. 13

## FIG. 14

# FIG. 15

160

108

# FIG. 16

165'

163

161

165'

163

# FIG. 17

163

165"

161

165"

163

# FIG. 18

GND

+5V  OUTPUT

107

AC100V

165

108

160

181,182   183

# FIG. 19

108

183

181   182

Vcc

AC
100V

D3

D1

Rf

U1

U3

M

Vs

R2

R

Q

OUTPUT

107

165

D2   D4

C1

R1

R3

U2

S

Q̄

GND

Cf

Q1

## FIG. 20

## FIG. 21

FIG. 22

FIG. 23(A)

FIG. 23(B)

# FIG. 24

# FIG. 25

33

## FIG. 26

LOAD TORQUE

ROLLER ROTATING
RADIAL = L

ROLLER ROTATING
RADIAL = 0.5L

WEIGHT

## FIG. 27

OUTPUT

ROLLER ROTATING
RADIAL = L

ROLLER ROTATING
RADIAL = 0.5L

WEIGHT

## FIG. 28

P1
(3) GND
(4) Vcc
(5) OUTPUT

183

182

181

AC 100V
50/60Hz

# FIG. 29

FIG. 30

# FIG. 31

EP 0 644 407 A2

FIG. 32(A)

FIG. 32(B)

FIG. 32(C)

FIG. 33(A)

FIG. 33(B)

FIG. 33(C)

TIME

# FIG. 34

# FIG. 35

*FIG. 36*

446 443
445 444 441 442
446
442

*FIG. 37*

441

A'
444
442
446
443
445
A

447

FIG. 38

PULSE OUTPUT

463

U3 · R Q / Q̄ · S

U1 · U2 · Q1

Cf

R2 · R3

462 · 461

C1 · R1

D1~4

M

RE

445 · 443 · 446

POWER SOURCE

FIG. 39

PULSE OUTPUT

463

U3 · R Q / Q̄ · S

U1 · U2 · Q1

Cf

R2 · R3

Q2 · Q3 · R4

464 · 462 · 461

C1 · R1

D1~4

M

RE

445 · 443 · 446

POWER SOURCE

EP 0 644 407 A2

## FIG. 40

## FIG. 41

44

FIG. 42

FIG. 43

FIG. 46

# FIG. 44

MAGNETIC FLUX $\phi$

A TERMINAL
B TERMINAL

C POINT

# FIG. 45

DRIVE COIL

A TERMINAL

B TERMINAL

TEMPERATURE
COMPENSATION
COIL

ALTERNATING MAGNETIC FIELD
OF DRIVE COIL AND ROTOR

FIG. 47(A)

FIG. 47(B)

47

# FIG. 47(C)

POWER SOURCE

445  R_E
443  446
461  D_1~4
462  C_1  R_1
464  Q_3  Q_2  R_4
R_4  C_f
463  (4) (8) (7) (5) NE555 (3) (6) (2) (1)

PULSE OUTPUT

EP 0 644 407 A2